(19) Europäisches Patentamt
European Patent Office
Office européen des brevets

(11) **EP 4 664 385 A1**

(12) **EUROPEAN PATENT APPLICATION**
published in accordance with Art. 153(4) EPC

(43) Date of publication:
**17.12.2025   Bulletin 2025/51**

(21) Application number: **23921243.4**

(22) Date of filing: **19.07.2023**

(51) International Patent Classification (IPC):
*G06Q 50/04* (2012.01)   *G06F 9/06* (2006.01)
*G06F 9/445* (2018.01)   *G06F 16/9035* (2019.01)
*G06Q 10/0833* (2023.01)

(52) Cooperative Patent Classification (CPC):
**G06F 9/06; G06F 9/445; G06F 16/9035;
G06Q 10/06; G06Q 10/0833; G06Q 50/04**

(86) International application number:
**PCT/JP2023/026399**

(87) International publication number:
**WO 2024/166418 (15.08.2024 Gazette 2024/33)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **09.02.2023   JP 2023018613
30.06.2023   JP 2023108211**

(71) Applicant: **TOYOTA JIDOSHA KABUSHIKI
KAISHA
Toyota-shi
Aichi 471-8571 (JP)**

(72) Inventors:
• **FUJIWARA, Teruyoshi**
**Toyota-shi, Aichi 471-8571 (JP)**
• **NITTA, Iwao**
**Toyota-shi, Aichi 471-8571 (JP)**
• **SUZUKI, Ryota**
**Nagoya-shi, Aichi 451-6015 (JP)**

(74) Representative: **Cabinet Beau de Loménie
103, rue de Grenelle / CS 90800
75340 Paris Cedex 07 (FR)**

(54) **INFORMATION PROCESSING DEVICE AND INFORMATION PROCESSING METHOD**

(57)     An information processing apparatus includes a controller configured to execute receiving designation of one or more first platforms that manage a supply chain, receiving input of first information concerning a first product including information concerning traceability, referring to information concerning a rule in transmitting information to each of the first platforms and generating, from the first information, second information corresponding to each of the first platforms, and referring to information concerning a connector corresponding to each of the first platforms and, for each of the first platforms, transmitting the second information or arranging the second information in a transmittable state in a predetermined storage region by the connector corresponding thereto.

FIG. 17

## Description

[Technical Field]

The present disclosure relates to an information processing apparatus and an information processing method.

[Background Art]

There has been proposed a system that shares information concerning a transaction commodity between a vendor company and a customer company (for example, Patent document 1). With this system, information can be shared by a common platform between companies adjacent to each other in a supply chain.

[Citation List]

[Patent document]

[Patent document 1] Japanese Patent Laid-Open No. 2004-171146

[Summary of the Invention]

[Problems to be solved by the invention]

An object of the present disclosure is to reduce labor and time for inputting information concerning a product.

[Means for solving the Problems]

An aspect of the present disclosure is
an information processing apparatus comprising a controller configured to execute:

receiving designation of one or more first platforms that manage a supply chain;
receiving input of first information concerning a first product including information concerning traceability;
referring to information concerning a rule in transmitting information to each of the first platforms and generating, from the first information, second information corresponding to each of the first platforms; and
referring to information concerning a connector corresponding to each of the first platforms and, for each of the first platforms, transmitting the second information or arranging the second information in a transmittable state in a predetermined storage region by the connector corresponding thereto.

An aspect of the present disclosure is an information processing method comprising a computer executing:

receiving designation of one or more first platforms that manage a supply chain;
receiving input of first information concerning a first product including information concerning traceability;
referring to information concerning a rule in transmitting information to each of the first platforms and generating, from the first information, second information corresponding to each of the first platforms; and
referring to information concerning a connector corresponding to each of the first platforms and, for each of the first platforms, transmitting the second information or arranging the second information in a transmittable state in a predetermined storage region by the connector corresponding thereto.

Another aspect of the present disclosure is a program for causing a computer to execute processing in the information processing apparatus described above and a storage medium non-transiently storing the program.

[Effects of the invention]

According to the present disclosure, it is possible to reduce labor and time for inputting information concerning a product.

[Brief Description of the Drawings]

Fig. 1 is a diagram for explaining an example of a supply chain according to a first embodiment.

Fig. 2 is a diagram for explaining an example of a relation among products supplied by the supply chain.

Fig. 3 is a diagram illustrating an overview of processing performed between company terminals and a server apparatus.

Fig. 4 is a hardware configuration diagram of a server apparatus according to the first embodiment.

Fig. 5 is a hardware configuration diagram of a company terminal according to the first embodiment.

Fig. 6 is a software configuration diagram of the server apparatus according to the first embodiment.

Fig. 7 is a software configuration diagram of the company terminal according to the first embodiment.

Fig. 8 is an example of product information generated by a product information generation unit.

Fig. 9 is an example of a screen output by an authority setting unit.

Fig. 10 is an example of permission information generated by the authority setting unit based on input information.

Fig. 11 is an example of a user interface including a list of products to be candidates of a link destination.

Fig. 12 is a diagram illustrating an example of a screen output by a second product information generation unit.

Fig. 13 is a diagram illustrating an example of a flow of processing executed by the server apparatus.

Fig. 14 is a diagram for explaining a product tree and amounts of carbon dioxide emitted in processes.

Fig. 15 is an example of a screen onto which the product tree is output by an image.

Fig. 16 is an example of a product tree in the case in which products without access authority are not disclosed.

Fig. 17 is a flowchart of processing for registering second information in a platform.

Fig. 18 is a sequence diagram for explaining processing performed by the server apparatus and the company terminal in first to third phases.

Fig. 19 is a sequence diagram for explaining processing performed by the server apparatus and the company terminal in a fourth phase.

Fig. 20 is a diagram schematically illustrating an example of a hardware configuration of a company terminal according to a second embodiment.

Fig. 21 is a flowchart of processing for registering second information in a platform.

Fig. 22 is a flowchart of processing for registering the second information in the platform.

Fig. 23 is a schematic configuration of a system in the case in which the second information is generated by a dedicated server apparatus.

Fig. 24 is a diagram schematically illustrating an example of a hardware configuration of a dedicated server apparatus according to a fourth embodiment.

Fig. 25 is a diagram schematically illustrating a software configuration of the dedicated server apparatus according to the fourth embodiment.

Fig. 26 is a diagram illustrating a schematic configuration of a system in the case in which second information is generated by a server apparatus.

Fig. 27 is a diagram schematically illustrating an example of a hardware configuration of a first server apparatus according to a fifth embodiment.

Fig. 28 is a diagram schematically illustrating an example of a software configuration of the first server apparatus according to the fifth embodiment.

Fig. 29 is a diagram illustrating a schematic configuration of a system in the case in which second information is provided to a target platform.

Fig. 30 is a diagram schematically illustrating an example of a hardware configuration of a second server apparatus according to a sixth embodiment.

Fig. 31 is a diagram illustrating an overview of processing executed by a server apparatus and a company terminal in the case in which second information is directly transmitted to the company terminal.

Fig. 32 is a flowchart of processing for registering product metadata in a target platform.

Fig. 33 is a flowchart of processing for providing second product information to a second company terminal of the target platform.

[Mode for Carrying Out the Invention]

Carbon Footprint of Products (CFP) is a mechanism for converting emissions of greenhouse effect gas emitted throughout an entire lifecycle from material procurement to disposal/recycle of commodities into $CO_2$ and displaying the emissions on commodities. In order to implement the CFP, traceability for recording suppliers involved in the material procurement to the disposal/recycle of the commodity and making a history traceable. On the other hand, when a supplier delivers a product to a plurality of companies, the supplier sometimes uses different platforms for each of the delivery destinations even if a target product is the same. In this case, the supplier is required to input the same information to the platforms and the information input is time-consuming. Note that occurrence of this problem is not limited to a scene in which the carbon footprint is collected. For example, the problem can occur in all scenes in which any information concerning a product such as other traceability-related information (for example, a material recycling rate and due diligence information) and other information concerning the product (for example, components and identification information) is collected.

Since content input in platforms is different, a user interface is different, or a connector is different in some cases, the supplier has to take measures matching the platforms every time information is registered in the platforms.

Therefore, an information processing apparatus that is one aspect of the present disclosure includes a controller configured to execute receiving designation of one or more first platforms that manage a supply chain, receiving input of first information concerning a first product including information concerning traceability, referring to information concerning a rule in transmitting information to each of the first platforms and generating, from the first information, second information corresponding to each of the first platforms, and referring to information concerning a connector corresponding to each of the first platforms and, for each of the first platforms, transmitting the second information or arranging the second information in a transmittable state in a predetermined storage region by the connector corresponding thereto.

The first platform manages at least a relation among companies. Note that the first platform may be a platform that manages information concerning the companies or information concerning products of the companies. Alternatively, the first platform may be a platform that manages metadata of the companies. The platform that manages this metadata may be configured to include a server and terminals of the companies or servers of the companies. A plurality of companies participate in the supply chain. The first product is a product that is about to participate in the first platform.

The first product may be, for example, a material, a single component, an assembly component, or a completed commodity. The first information of the first product includes information concerning traceability. The information concerning the traceability can include, for example, information concerning an amount of greenhouse effect gas emitted in a manufacturing process for the first product. The second information is information generated from the first information according to a rule set in the first platform. Here, when a plurality of first platforms are present, items input in the respective first platforms are sometimes different. For example, a unit at the time when mass is input sometimes can be different. Thus, the controller generates the second information for each of the first platforms according to the rule of the first platform. For example, this rule may be stored in a storage unit of the information processing apparatus, may be provided from an external server, or may be provided from the respective first platforms. The rule may be formed of, for example, a semantic data model and a conversion formula therefor.

The controller refers to information concerning a connector corresponding to each of the first platforms. Here, it is also conceivable that different connectors are used for each of the first platforms. Transmission and reception of information is enabled among the first platforms via the connectors corresponding to the first platforms. That is, the controller acquires information concerning the connectors corresponding to the first platforms, whereby the second information can be transmitted to the first platforms via the connectors. The second information may be arranged in a predetermined storage region in a state of being transmittable to the first platforms by the connectors. In this way, the controller can provide the second information concerning the first product to the first platforms. The supplier can save labor and time for respectively inputting data corresponding to the first platforms.

Note that the information processing apparatus may be a terminal of a company manufacturing the first product or may be a server independent from a platform, the server providing, to the first platform, information acquired from the terminal of the company manufacturing the first product. Alternatively, the information processing apparatus may be a server of a platform different from the first platform.

Information concerning a rule in transmitting information to each of the first platforms and information concerning a connector corresponding to each of the first platforms may be arranged in the predetermined storage region. In this way, it is possible to quickly acquire these kinds of information. Note that, alternatively, these kinds of information may be acquired via a network.

In response to information insufficient only with the first information with respect to the information requested by the first platform being present, the controller may refer to inventory data corresponding to the first platform, supplement, based on information obtained from the inventory data, the information insufficient only with the first information, and generate the second information. Here, it is also conceivable that it is difficult to provide a part or all of data for items requested to be input in the first platforms. For example, it is conceivable that it is difficult to provide data to other countries because of laws of countries. In such a case, inventory data is used as data substituting actual data. The inventory data is, for example, data corresponding to items input as the second information and is, for example, data provided by the first platforms. The first information (primary data) is, for example, a measurement value. On the other hand, the inventory data (secondary data) is a reference value used when the measurement value is not obtained. The inventory data may be, for example, data specifying representative values for each of items. By supplementing the second information using the inventory data, it is possible to input data for all the items requested to be input.

The controller may output a warning in response to information insufficient only with the first information with respect to the information requested by the first platform being present. By outputting such a warning, the controller can urge a user to input the insufficient information. The controller outputs a warning when the insufficiency is supplemented by the inventory data, whereby the user can learn what kind of data has been supplemented.

In response to third information designated as not disclosed being included in the first information, the controller can exclude the third information and generate the second information. The third information designated as not disclosed is, for example, confidential information. The third information may be information that can be designated by the user. By excluding such third information, it is possible to prevent information disadvantageous for the user from being disclosed.

In response to the third information being included in the first information, the controller can also refer to inventory data corresponding to the first platform, supplement the excluded third information with information obtained from the inventory data, and generate the second information. In this way, the inventory data can also be used as data input instead of the third information.

The information concerning the rule in transmitting information to each of the first platforms includes information concerning a rule concerning fourth information that cannot be disclosed according to a location of a terminal that transmits the information to each of the first platforms. In response to the fourth information being included in the first information, the controller can exclude the fourth information and generate the second information. The fourth information is, for example, information, disclosure of which is restricted by law. For example, depending on a country, disclosure of information to other countries is restricted. In such a case, by excluding the fourth information and generating the second information, it is possible to generate second information conforming to the rule corresponding to the location.

In response to the fourth information being included in the first information, the controller can also refer to inventory data corresponding to the first platform, supplement the excluded fourth information with information obtained from the inventory data, and generate the second information. By supplementing the fourth information with the inventory data while excluding the fourth information, it is possible to generate the second information for which traceability is ensured.

The information concerning the rule in transmitting information to each of the first platforms may include information concerning a rule of a unit. The controller may generate the second information according to the rule of the unit corresponding to the first platform. Since a unit of input data is sometimes different for each of the first platforms, by performing conversion of the unit, it is possible to generate the second information corresponding to the first platforms.

The first product may be a product concerning a battery. That is, the first product may be a product used when the battery is manufactured. Accordingly, it is possible to ensure traceability concerning the battery.

Embodiments of the present disclosure are described below with reference to the drawings. Configurations of the embodiments described below are exemplifications. The present disclosure is not limited to the configurations of the embodiments. The embodiments described below can be combined as much as possible.

<First Embodiment>

A system according to the present embodiment is a system that provides information concerning a product supplied by a supply chain including a plurality of companies. The information concerning the product is typically information concerning traceability.

First, the structure of the supply chain is described. In an example, at least some of companies (intermediate supplies) included in the supply chain can receive components from one or more upstream companies, produce an own product using the received components, and deliver the produced own product to a company in the next process (a downstream company). A most upstream company can directly produce an own product and deliver the produced own product to a company in the next process. Some of the companies of the supply chain can directly deliver a product received from another company to a different company (that is, can be involved in distribution). The plurality of companies repeat this and a final product is obtained in a final process.

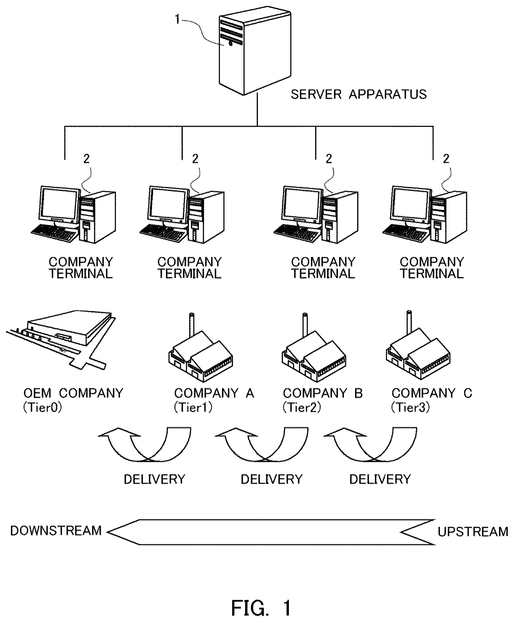

Fig. 1 is a diagram for explaining an example of a supply chain according to the present embodiment. In the example illustrated in Fig. 1, a scene in which a product concerning an automobile is manufactured is assumed. Specifically, the supply chain illustrated in Fig. 1 is configured to include an OEM company and a plurality of companies, which are suppliers. The OEM company is a company that assembles a final product. The plurality of companies (companies A to C), which are the suppliers, are companies that supply components, materials, assemblies, and the like for manufacturing the final product. The plurality of companies, which are the suppliers, respectively produce pluralities of products and deliver the products to companies located in an immediately lower class. The plurality of companies repeat this. In a final process, assembly of the final product is performed.

In the present embodiment, a side that delivers a product in a certain class is referred to as upstream side and a side that procures the product and produces a new product is referred to as downstream side. In the present specification, a company located on the upstream side is referred to as upstream company and a company located on the downstream side is referred to as downstream company. A product produced by the upstream company is referred to as upstream product and a product produced by the downstream company is referred to as downstream product. The upstream product is included in the downstream product.

In the present embodiment, a class included in a supply chain is referred to as Tier. A Tier 0 is a lowermost class that assembles a final product (corresponding to the OEM company). Tiers 1, 2, and 3 transition to the upstream side.

Depending on a class of attention, a downstream company changes to an upstream company. For example, a company B located in the Tier 2 is a downstream company in a relation with the Tier 3 but is an upstream company in a relation with the Tier 1. In this way, the definitions of the upstream company and the downstream company can change for each of classes.

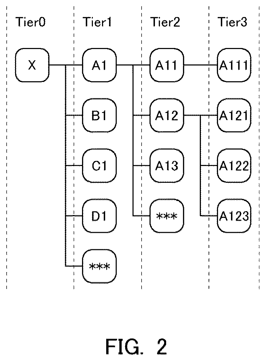

Fig. 2 is a diagram for explaining an example of a relation among products supplied by the supply chain. Here, a supply relation among a plurality of products constituting a final product X is represented by a tree diagram. In the present example, the final product X is produced by assembling products A1, B1, C1, D1, and the like. The product A1 is produced by assembling products A11, A12, A13, and the like. In this way, a relation among a plurality of products constituting a final product can be represented by a tree diagram in which the individual products are nodes. In the following description, a tree diagram concerning a specific final product is referred to as product tree. In an example, the final product X is a battery mounted on a battery electric vehicle (BEV). In another example, the final product X may be an automobile or a product relating to the automobile such as an assembly of the automobile.

A server apparatus 1 according to the present embodiment collects, from terminals corresponding to companies (company terminals 2), information concerning products produced by the companies (hereinafter, product information) and information for linking the kinds of product information and generates such a product tree based on these kinds of information. The product information includes information concerning traceability (for example, information concerning emission of greenhouse effect gas. Hereinafter referred to as "traceability-related information"). Tracking of a carbon footprint or the like can be performed by tracing the product tree. Note that the traceability-related information may include all information that can be a target of ensuring traceability.

As illustrated in Fig. 1, the information processing system according to an example of the present embodiment includes the server apparatus 1 and the plurality of company terminals 2. The company terminal 2 is a terminal corresponding to each of a plurality of companies constituting a supply chain. The plurality of company terminals 2 can be included in the system. The server apparatus 1 collects, from each of the plurality of company terminals 2, information for generating a product tree and generates the product tree based on these kinds of information. Further, the server apparatus 1 can execute, based on the generated product tree, processing concerning traceability (typically, for example, processing for calculating emission of carbon dioxide). The server apparatus 1 can transmit an execution result of the processing to the company terminals 2.

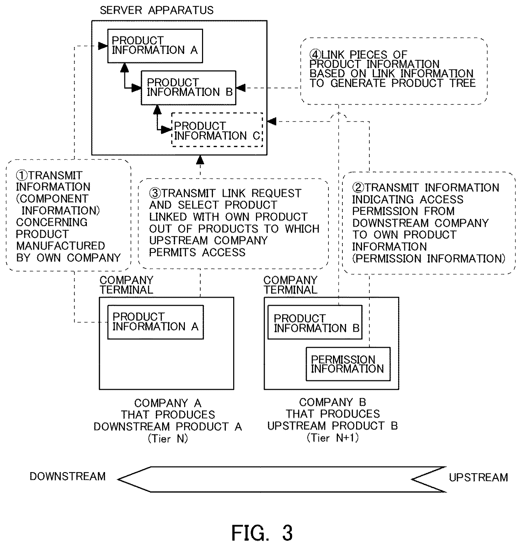

Subsequently, an overview of processing for the server apparatus 1 generating a product tree is described with reference to Fig. 3. Fig. 3 is a diagram illustrating an overview of processing performed between the company terminal 2 and the server apparatus 1. In an example illustrated in Fig. 3, it is assumed that, in any class, a company A, which is a downstream company, and a company B, which is an upstream company, are present. The company B produces a product B and delivers the product B to the company A and the company A produces a product A using the product B. That is, in the example illustrated in Fig. 3, the product B is a child node of the product A on the product tree.

In order to generate a product tree, the company terminals 2 corresponding to the companies transmit information concerning products produced by the own companies to the server apparatus 1. In the present example, the company terminal 2 corresponding to the company A transmits product information concerning the product A (referred to as product information A) to the server apparatus 1. Similarly, the company terminal 2 corresponding to the company B transmits product information concerning the product B (referred to as product information B) to the server apparatus 1. The product information of the companies is stored in the server apparatus 1.

Operation for linking the product information stored in the server apparatus 1 is performed by the company terminal 2. In an example, a person in charge in a downstream company logs in to the server apparatus 1 from the company terminal 2 using an account of the downstream company and selects an upstream product that is a link destination of a downstream product, which is an own product. In this way, linking between the pieces of product information is performed from the downstream product to the upstream product. The server apparatus 1 links the pieces of product information based on the selection.

However, when causing the person in charge to select a product that is a link destination, if products included in a supply chain and all information concerning the products are presented as a selection, confidentiality of information concerning companies constituting the supply chain and information concerning products produced by the companies is spoiled. Further, it is sometimes inappropriate to disclose an entire product tree to one supplier.

Thus, in response to a request of an upstream company, the server apparatus 1 according to the present embodiment imparts, to a downstream company, beforehand, access authority to product information of an upstream product. The server apparatus 1 permits reference from the downstream company within a range of the imparted authority.

In the example illustrated in Fig. 3, the company terminal 2 corresponding to the company B, which is the upstream company, transmits a request (information) instructing to "impart, to the company A, access authority to the product information B" to the server apparatus 1. When receiving a request relating to linking from the company terminal 2 corresponding to the company A, the server apparatus 1 provides only a list of product information for which access authority is imparted to the company A and causes a person in charge in the company A to select a product as a link destination. When receiving a reference request to a product tree from the company terminal 2 corresponding to the company A, the server apparatus 1 provides, to the company terminal 2, a product tree in which information other than information for which access authority is imparted to the company A is concealed. Accordingly, it is possible to conceal information concerning unrelated companies and products.

[Hardware configuration]

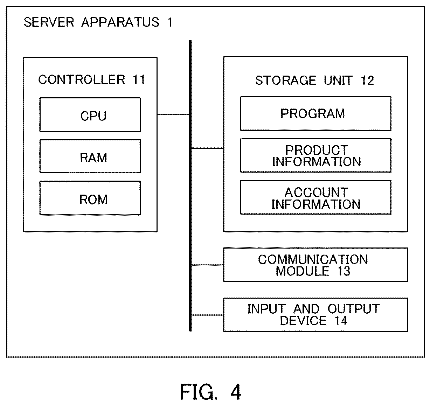

Subsequently, hardware configurations of the apparatuses constituting the system are described with reference to Fig. 4. Fig. 4 is a diagram schematically illustrating an example of a hardware configuration of the server apparatus 1 according to the present embodiment. The server apparatus 1 is configured as a computer including a controller 11, a storage unit 12, a communication module 13, and an input and output device 14.

The server apparatus 1 can be configured as a computer including a processor (a CPU, a GPU, or the like), a main memory (a RAM, a ROM, or the like), and an auxiliary storage device (an EPROM, a hard disk drive, a removable medium, or the like). In the auxiliary storage device, an operating system (OS), various programs, various tables, and the like are stored. Functions (software modules) matching predetermined purposes described below can be implemented by executing the programs stored in the auxiliary storage device. However, some or all of the modules may be implemented as hardware modules by a hardware circuit such as an ASIC or an FPGA.

The controller 11 is an arithmetic unit that implement various functions of the server apparatus 1 by executing predetermined programs. The controller 11 can be implemented by a hardware processor such as a CPU. The controller 11 may be configured to include a RAM, a ROM (Read Only Memory), and a cache memory.

The storage unit 12 is means for storing information and is configured by a storage medium such as a RAM, a magnetic disk, or a flash memory. In the storage unit 12, a program to be executed by the controller 11, data used by the program, and the like are stored. A database is constructed in the storage unit 12. In the database, product information collected from the plurality of company terminals 2 and account information concerning the companies are stored. Details are described below.

The communication module 13 is a communication interface for connecting the server apparatus 1 to a network. The communication module 13 may be configured to include, for example, a network interface board and a wireless communication interface for wireless communication. The server apparatus 1 can perform data communication with other computers (for example, the other server apparatuses 1 or the company terminals 2) via the communication module 13.

The input and output device 14 is means for receiving input operation performed by an operator and presenting information to the operator. Specifically, the input and output device 14 includes devices for performing input such as a mouse and a keyboard and devices for performing output such as a display and a speaker. The input and output device may be integrally configured by, for example, a touch panel display.

Note that, in a specific hardware configuration of the server apparatus 1, omission, substitution, and addition of components are possible as appropriate according to an embodiment. For example, the controller 11 may include a plurality of hardware processors. The hardware processors may be configured by a microprocessor, an FPGA, a GPU, and the like. The input and output device 14 may be omitted or an input and output device (for example, an optical drive) other than the exemplified one may be added. The server apparatus 1 may be configured by a plurality of computers. In this case, hardware configurations of the computers may coincide or may not coincide.

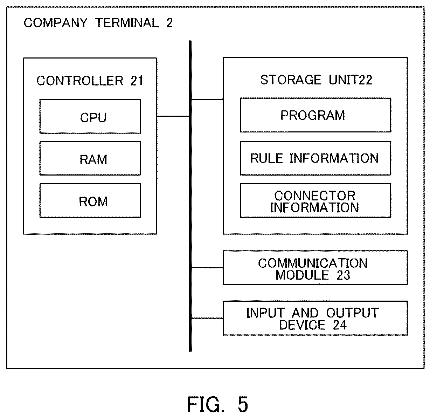

Fig. 5 is a diagram schematically illustrating an example of a hardware configuration of the company terminal 2 according to the present embodiment. The company terminal 2 is configured as a computer including a controller 21, a storage unit 22, a communication module 23, and an input and output device 24.

Like the server apparatus 1, the company terminal 2 can be configured as a computer including a processor (a CPU, a GPU, or the like), a main memory (a RAM, a ROM, or the like), and an auxiliary storage device (an EPROM, a hard disk drive, a removable medium, or the like). However, some or all of functions (software modules) may be implemented as hardware modules by a hardware circuit such as an ASIC or an FPGA.

The controller 21 is an arithmetic unit that implements various functions of the company terminal 2 by executing predetermined programs. The controller 21 can be implemented by a hardware processor such as a CPU. The controller 21 may be configured to include a RAM, a ROM (Read Only Memory), and a cache memory.

The storage unit 22 is means for storing information and is configured by a storage medium such as a RAM, a magnetic disk, or a flash memory. In the storage unit 22, a program to be executed by the controller 21, data used by the program, rule information concerning a rule of input of product information, connector information concerning connectors corresponding to platforms, and the like are stored. Details are described below.

The communication module 23 is a communication interface for connecting the company terminal 2 to a network. The communication module 23 may be configured to include, for example, a network interface board and a wireless communication interface for wireless communication. The company terminal 2 can perform data communication with other computers (for example, the server apparatus 1) via the communication module 23.

The input and output device 24 is means for receiving input operation performed by an operator and presenting information to the operator. Specifically, the input and output device 24 includes devices for performing input such as a mouse and a keyboard and devices for performing output such as a display and a speaker. The input and output device may be integrally configured by, for example, a touch panel display.

Note that, in a specific hardware configuration of the company terminal 2, as in the server apparatus 1, omission, substitution, and addition of components are possible as appropriate according to an embodiment.

[Software configuration]

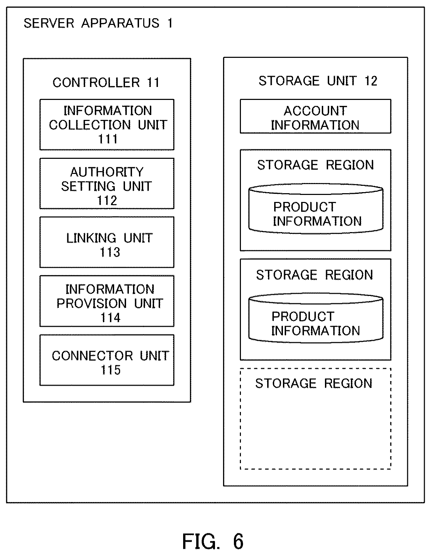

Subsequently, software configurations of the apparatuses constituting the system are described with reference to Fig. 6. Fig. 6 is a diagram schematically illustrating an example of a software configuration of the server apparatus 1 according to the present embodiment. In the present embodiment, the controller 11 is configured to include five software modules of an information collection unit 111, an authority setting unit 112, a linking unit 113, an information provision unit 114, and a connector unit 115. The software modules may be implemented by programs stored in the storage unit 12 being executed by the controller 11 (a CPU). Note that information processing executed by the information collection unit 111, the authority setting unit 112, the linking unit 113, the information provision unit 114, and the connector unit 115 described below is synonymous with the information processing executed by the controller 11.

The information collection unit 111 is configured to execute processing for receiving product information transmitted from the company terminal 2 and storing the product information in the storage unit 12. The authority setting unit 112 is configured to receive, from the company terminal 2, information for setting access authority to product information (hereinafter, permission information). Further, the authority setting unit 112 is configured to execute, based on the received information, processing for setting the access authority to the product information stored in the storage unit 12.

The linking unit 113 is configured to perform interaction with the company terminal 2 to acquire, from the company terminal 2, information for linking pieces of product information. Further, the linking unit 113 is configured to execute, based on the acquired information, processing for writing information representing a linking relation for the product information stored in the storage unit 12. The linking unit 113 is configured to execute processing for receiving a request to impart termination information and, in response to the request, imparting the termination information to the product information stored in the storage unit 12. A product tree is formed by reflecting the linking and the termination imparting. That is, the forming the product tree is configured by storing the linking information and the termination information in the storage unit 12. The linking unit 113 is configured to generate the product tree according to results of the linking and the termination imparting.

The information provision unit 114 is configured to execute information processing relating to a product tree and output a result of executing the information processing. The information processing relating to the product tree may include processing for performing an arithmetic operation concerning traceability for the product tree. The outputting the result of executing the information processing may include processing for providing information concerning the generated product tree to the company terminal 2. In an example, the information provision unit 114 is configured to generate information concerning a product tree and output the generated information concerning the product tree.

The connector unit 115 includes an application used for communication concerning a platform. Communication with the company terminal 2 and communication among the plurality of server apparatuses 1 may be performed via the connector unit 115. The connector unit 115 may be configured to perform processing concerning data communication such as authentication and encryption of communication. The connector unit 115 may be configured to control access to respective data based on a rule such as a law or a contract. In an example, the connector unit 115 may be an application used for communication concerning a platform, such as an IDS (International Data Spaces) connector or an EDC (Eclipse Dataspace Connector).

In the present embodiment, the storage unit 12 is configured to include a plurality of logical storage regions. In each of the plurality of storage regions, different kinds of access authority can be set as in, for example, a region where access authority is imparted to the company A, a region where access authority is imparted to the company B, and a region where access authority is imparted to both the companies A and B. The authority setting unit 112 performs setting of access authority by storing product information received from the company terminal 2 in an appropriate storage region. A specific processing method is described below.

Account information is stored in the storage unit 12. In the present embodiment, when operators of companies log in to the server apparatus 1 using corresponding accounts of the companies via the company terminals 2, interaction between the server apparatus 1 and the company terminals 2 is performed. The account information is information concerning accounts corresponding to the companies constituting a supply chain. Note that the logging in using the account is an example of accessing the server apparatus 1 as a company corresponding to the account. However, an access method to the server apparatus 1 may not be limited to such an example and may be selected as appropriate according to an embodiment.

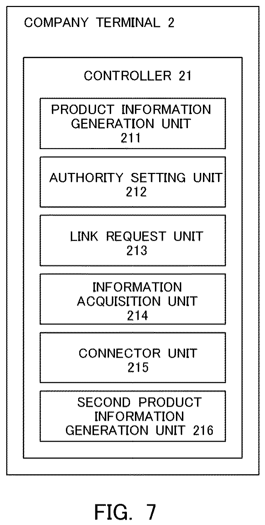

Fig. 7 is a diagram schematically illustrating a software configuration of the company terminal 2 according to the present embodiment. In the present embodiment, the controller 21 is configured to include six software modules of a product information generation unit 211, an authority setting unit 212, a link request unit 213, an information acquisition unit 214, a connector unit 215, and a second product information generation unit 216. The software modules may be implemented by executing, with the controller 21 (the CPU), the programs stored in the storage unit 22. Note that information processing executed by the product information generation unit 211, the authority setting unit 212, the link request unit 213, the information acquisition unit 214, the connector unit 215, and the second product information generation unit 216 described below is synonymous with the information processing executed by the controller 21.

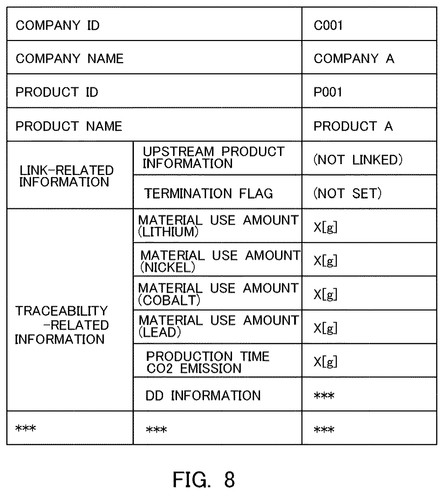

The product information generation unit 211 is configured to generate information concerning a product of a company corresponding to the company terminal 2 (product information). Fig. 8 is an example of the product information generated by the product information generation unit 211. The product information may be input via an operator of the apparatus. In the present embodiment, the product information is configured to include fields of a company ID, a company name, a product ID, and a product name. The company ID and the company name are an identifier and a name of a company that produces a target product (that is, a company that uses the company terminal 2). The product ID and the product name are an identifier and a name of the target product.

Further, the product information is configured to include link-related information. The link-related information is information for identifying an upstream product linked with a target product. In the present embodiment, the link-related information includes fields of "upstream product information" and "termination flag".

The upstream product information field is configured to store information for identifying product information corresponding to the upstream product linked with the target product (that is, a product necessary for producing the target product and included in the target product). The upstream product information field is used when the server apparatus 1 performs linking of products. Basically, the target product is not linked with the upstream product at a stage when the product information is generated. Therefore, a value indicating the upstream product may not be stored in the upstream product information field.

The termination flag field is configured to store a flag indicating whether the target product is a leaf node in the product tree, that is, a node located most upstream (at the end). In the present embodiment, since the plurality of company terminals 2 transmit product information, this flag is used in order to discriminate, for a product present in the product tree, whether a product is further linked on the upstream side or further linking does not occur (the target product is located most upstream). That is, the termination flag field is used when the server apparatus 1 decides linking among products. Basically, a link relation of the target product is undecided at a stage when the product information is generated. Therefore, "0 (not termination in the current state)" may be stored in the termination flag field. In order to finally generate the product tree, the product information of the companies stored in the server apparatus 1 is set to a state of "linking with an upstream product is performed" or ""1" is set in the termination flag".

Further, the product information is configured to include traceability-related information. In an example, the traceability-related information may include a use amount of a material (for example, an upstream product) per production amount of a product, information concerning a recycling rate of a predetermined material, emission (a CFP value) of greenhouse effect gas emitted when the product is produced, due diligence-related information, or a combination of the foregoing. The predetermined material may be, for example, lithium, nickel, cobalt, lead, or graphite. The recycling rate may be directly expressed or may be indirectly expressed like a combination of a total use amount and a use amount of a recycle material. These values are values corresponding to a process of producing the target product. For example, in the case of an example illustrated in Fig. 3, for example, an amount of greenhouse effect gas emitted in a production activity for the product A is stored in the traceability-related information included in the product information A. Information concerning a process until the upstream product is produced (for example, an amount of greenhouse effect gas emitted until the upstream product B is produced) is not included in the traceability-related information included in the product information A.

Note that the traceability-related information may be selected as appropriate according to an embodiment. In an example, emission of greenhouse effect gas (carbon footprint) may include emissions of a scope 1, a scope 2, and a scope 3. The scope 1 may be direct emission of greenhouse effect gas by a company itself. The scope 2 may be indirect emission involved in use of electricity, heat, and steam supplied from other companies. The scope 3 may be indirect emission other than the scope 1 and the scope 2. In an example, the due diligence-related information may be a technical document indicating that, concerning a product in which a target material (for example, cobalt, natural graphite, lithium, or nickel) is included, duties of an amount of a material contained in the product and responsible mineral procurement of a refinery or the like are fulfilled. In another example, the due diligence-related information may include a score indicating a degree of the fulfillment of the duties.

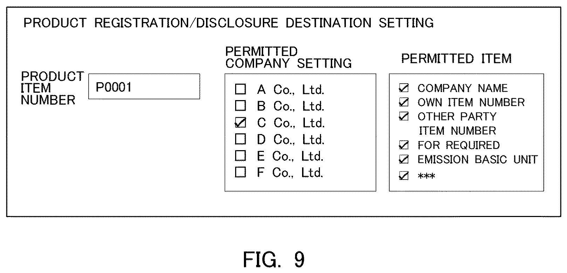

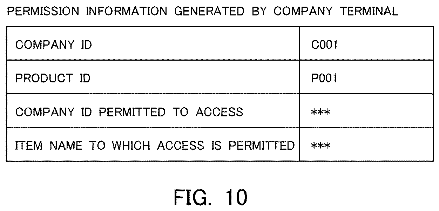

The authority setting unit 212 is configured to designate a downstream company that is permitted to access the product information transmitted from the company terminal 2 to the server apparatus 1. Fig. 9 is an example of a screen output by the authority setting unit 212. As illustrated, the authority setting unit 212 is configured to receive designation of a downstream company permitted to access any own product. Fig. 10 is an example of permission information generated by the authority setting unit 212 based on input information. The authority setting unit 212 is configured to transmit the permission information to the server apparatus 1 at any timing. Note that access authority may be set in units of product information or may be set in units of items ("permission items" in the figure) included in the product information.

Accordingly, it is also possible to take a measure of partial disclosure for, for example, disclosing presence of a product but not disclosing specific information concerning a used material, an amount of use, and the like.

Note that a list of companies presented on the screen illustrated in Fig. 9 can be a list of companies having trading results with the own company in the past. For this reason, the server apparatus 1 may store, for each of the companies, data concerning transactions in the past (transaction data) and generates a list of companies based on the transaction data. The transaction data may include, for example, an identifier of a target product, an identifier of a company that produced the product, and a transaction date.

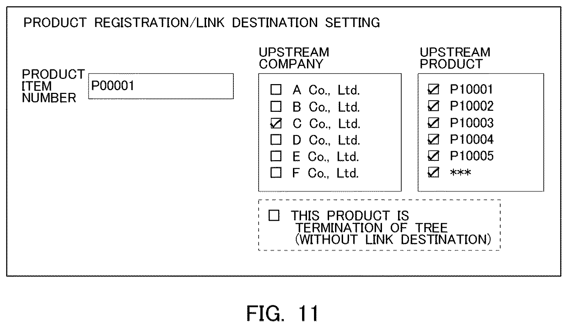

The link request unit 213 is configured to request the server apparatus 1 to link the product information of the own company transmitted to the server apparatus 1 with an upstream product. In an example, first, the link request unit 213 transmits a company ID of the own company and a product ID to the server apparatus 1 and requests linking between pieces of product information corresponding to the product ID. In response to the request, the server apparatus 1 generates a user interface including a list of product information to which access from a target company is permitted (that is, candidate of a link destination) and provides the generated user interface to the company terminal 2. Fig. 11 is an example of the user interface including the list of the products to which access from the target company is permitted.

Note that the list of the products presented in Fig. 11 can be a list of products having trading results with the own company in the past. The server apparatus 1 may generate the list further based on stored transaction data.

Subsequently, the link request unit 213 is configured to cause the operator to select, out of the list, an upstream product to be linked. Further, the link request unit 213 is configured to transmit, to the server apparatus 1, an identifier of a product (a downstream product), which is a link source, and an identifier of an upstream product, which is a link destination, as a pair. In response to the transmission, the server apparatus 1 can perform linking between pieces of product information.

Note that, when an upstream product linked with the target product is absent, it is possible to clearly indicate to that effect by, for example, checking a checkbox indicated by a dotted line in Fig. 11. In this case, linking between pieces of product information is not performed.

The information acquisition unit 214 is configured to request the server apparatus 1 to provide a product tree and output information transmitted from the server apparatus 1.

The connector unit 215 includes an application used for communication. Communication between the company terminal 2 and the server apparatus 1 may be performed via the connector unit 215. The connector unit 215 may be configured to perform processing concerning data communication such as authentication and encryption of communication. The connector unit 215 may be configured to control access to data based on a rule such as a law or a contract. In an example, the connector unit 215 may be an application used for communication concerning a platform, such as an IDS (International Data Spaces) connector or an EDC (Eclipse Dataspace Connector). The connector unit 215 acquires a connector type at the time of communication of platforms with the server apparatus 1 and selects a connector corresponding to the acquired connector type. Note that the connector type may be acquired from the server apparatus 1 or may be stored in advance in the storage unit 22.

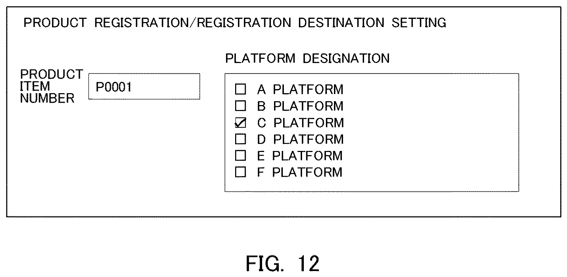

The second product information generation unit 216 is configured to convert the product information (hereinafter referred to as first information as well) generated by the product information generation unit 211 into product information (hereinafter referred to as second information as well) corresponding to the platforms. The second product information generation unit 216 receives designation of a platform. The second product information generation unit 216 generates a user interface including a list of platforms to be transmission destinations of the product information and presents the generated user interface to the operator of the company terminal 2. Fig. 12 is a diagram illustrating an example of a screen output by the second product information generation unit 216. This screen is output after completion of input of the first product information illustrated in Fig. 8. As illustrated in Fig. 12, the second product information generation unit 216 is configured to receive, for any own product, designation of a platform to which the second information is transmitted. At this time, the second product information generation unit 216 can also receive designation of a plurality of platforms.

The second product information generation unit 216 acquires information concerning a rule (rule information) corresponding to the designated platform. This rule information may be acquired from the server apparatus 1, may be stored in the storage unit 22, or may be acquired from a server apparatus different from the server apparatus 1 of the platform. The rule information may be stored in a non-transitory computer-readable storage medium. Further, the rule information may be retained in an NAS (Network Attached Storage). The rule information may be configured by, for example, a semantic data model and a conversion formula thereof. The rule information may be information concerning rule concern a unit. For example, information indicating whether mass is represented by "g" or represented by "kg" may be set as the rule information. Further, alternatively, the rule information may include information concerning an input template. In this case, for example, the first information may be converted into the second information according to an input template of a designated platform. The rule information may be information concerning an input item. For example, the second product information generation unit 216 may acquire an item input to the designated platform, extract the item out of the first information, and generate the second information. The second product information generation unit 216 may acquire the second information by converting the first information with a conversion formula. This second information is generated for each designated platform. Depending on a rule of a platform, it is also possible that the first information does not need to be converted. In this case, the first information is directly treated as the second information.

The second product information generation unit 216 is configured to transmit the second information to the server apparatus 1 as product information at any timing. This second information is transmitted via the connector unit 215. The server apparatus 1, which receives the second information, also receives the second information via the connector unit 115.

[Details of processing concerning formation of a product tree]

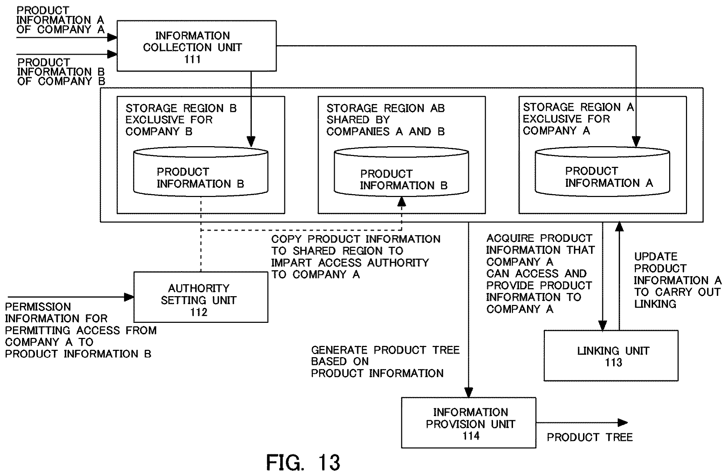

Subsequently, specific content of processing performed by the server apparatus 1 and the company terminal 2 is described. Fig. 13 is a diagram illustrating an example of a flow of processing executed by the server apparatus 1 based on a request from the company terminal 2.

The processing performed by the server apparatus 1 is roughly classified into the following four phases.

(1) A first phase in which the server apparatus 1 receives product information transmitted from the company terminal 2 and stores the received product information

(2) A second phase in which the server apparatus 1 receives permission information transmitted from the company terminal 2 and sets access authority to product information according to the received permission information

(3) A third phase in which the server apparatus 1 performs interaction with the company terminal 2 to perform linking between pieces of product information

(4) A fourth phase in which the server apparatus 1 provides information concerning a product tree based on a result of the linking

In the example illustrated in Fig. 13, the company A is a downstream company and the company B is an upstream company. A product produced by the company A is the product A and a product produced by the company B is the product B. Product information corresponding to the product A is the product information A and product information corresponding to the product B is the product information B.

In the first phase, the information collection unit 111 of the server apparatus 1 acquires product information from the product information generation unit 211 of the company terminal 2. In the example illustrated in Fig. 13, the server apparatus 1 acquires the product information A from the company terminal 2 corresponding to the company A and acquires the product information B from the company terminal 2 corresponding to the company B. The information collection unit 111 stores the product information A in a storage region where access authority is imparted to only the company A (hereinafter, storage region A). The information collection unit 111 stores the product information B in a storage region where access authority is imparted to only the company B (hereinafter, storage region B). In this way, the information collection unit 111 stores product information transmitted from any company in a dedicated storage region where access authority is imparted to only the company.

In the second phase, the authority setting unit 112 of the server apparatus 1 receives permission information from the authority setting unit 212 of the company terminal 2 and sets access authority to product information according to the received permission information. The permission information is information in which a product and a company that permits access to product information of the product are correlated as illustrated in Fig. 10.

In the example illustrated in Fig. 13, it is assumed that the authority setting unit 212 receives permission information to the effect that access to the product information B of the upstream company from the company A, which is the downstream company, is permitted. In this case, the authority setting unit 112 copies the product information B stored in the storage region B to a storage region where access authority is imparted to both the companies A and B (hereinafter, storage region AB). Accordingly, the product information B is in a state of accessible from both of the company A and the company B. Note that, when access authority is not set for a specific item included in the product information, the item is excluded from a copy target to the storage region AB.

In the following description, a storage region where access authority is imparted to only a specific company is referred to as "dedicated storage region" and a storage region where access authority is imparted to a plurality of companies is referred to as "shared storage region".

The copy of the product information is executed by the server apparatus 1 in response to permission information being received from the company terminal 2. That is, the company terminal 2 transmits permission information to the server apparatus 1 to cause the server apparatus 1 to execute an operation for copying product information identified by the permission information from a dedicated storage region of a target company to a shared storage region accessible from a downstream company.

In the third phase, the linking unit 113 of the server apparatus 1 receives a link request from the link request unit 213 of the company terminal 2 and performs linking between pieces of product information based on the received link request.

First, the linking unit 113 receives a link request from the company terminal 2. The link request is transmitted from the company terminal 2 of the downstream company. In the example illustrated in Fig. 13, it is assumed that the company terminal 2 of the company A transmits the link request. The link request includes a company ID and a product ID of a target product. The linking unit 113 acquires product information stored in a storage region accessible from the company and generates a list of the acquired product information. In the example illustrated in Fig. 13, the product information B stored in the storage region AB is accessible from the company A. For that reason, in the company terminal 2 of the company A, the product information B can be selected as a link destination.

The link request unit 213 of the company terminal 2 presents the list to the operator and causes the operator to select products to be linked. In the case of the present example, the product A and the product B are targets of linking each other. The operator inputs, for example, for the product A, via the input and output device 24, information indicating that the upstream product is the product B. The link request unit 213 transmits, to the linking unit 113, data (link data) for correlating the upstream product (the product B) and the downstream product (the product A) each other.

As described with reference to Fig. 8, the field (the link-related information) concerning a product to be a link destination is provided in the product information. The linking unit 113 stores, based on the link data described above, information corresponding to the product information B (that is, the upstream product) in the link-related information included in the product information A. For example, an identifier of an upstream product, an identifier of a company that produces the upstream product, and the like are stored in the link-related information.

Note that, for example, a pointer to product information to be a link destination may be stored in the link-related information. The pointer points, for example, an address of product information corresponding to the upstream product. According to the processing described above, a part of a tree structure in which the product information of the downstream product is a parent node and the product information of the upstream product is a child node is formed.

Note that further linking is not performed at the end of the product tree. In this case, the link request unit 213 transmits data indicating that the product is the end of the tree instead of transmitting link data. When receiving the data, the linking unit 113 sets "1" in a termination flag field of product information corresponding to the data. That is, in the third phase, "processing for setting an upstream product to be a link destination" or "processing for setting a termination flag" is executed.

In the fourth phase, the information provision unit 114 of the server apparatus 1 generates information concerning a product tree based on the stored product information and outputs the information concerning the product tree. The generating information concerning a product tree can include processing for, after a link among nodes is formed by linking of pieces of product information, generating various kinds of information concerning products (for example, information concerning traceability and an image representing, with a tree diagram, a link relation among products). In order to generate the information concerning the product tree, all kinds of linking among the pieces of product information need to be completed and "1" needs to be set in termination flags of all leaf nodes. When such conditions are satisfied, the information provision unit 114 can appropriately generate the information.

As described with reference to Fig. 2, in the product tree in the present embodiment, a supply relation among pieces of product information in a supply chain is represented by a tree diagram. The information provision unit 114 can generate, based on the product information, an image representing the tree diagram.

Further, when generating information concerning a product tree, the information provision unit 114 integrates traceability-related information defined in the respective kinds of product information and outputs a result of the integration.

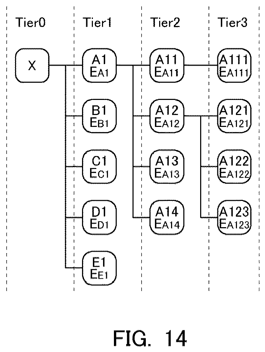

Here, the integration of the traceability-related information is described with reference to Fig. 14. Fig. 14 is a diagram for explaining a plurality of products constituting the final product X and amounts of carbon dioxide ($CO_2$) emitted in processes for producing the plurality of products. For example, it is assumed that $E_{A12}$ [g] of carbon dioxide is emitted in a process of producing the product A12 in the figure. It is assumed that the product is configured by three upstream products A121 to A123. An upstream product included in a certain product in this way is referred to as "included product" as well. Here, a total amount of carbon dioxide emitted until a certain target product is produced can be obtained by repeating, from a most upstream product, which is a leaf node, to the target product, processing for passing $CO_2$ emission correlated with an upstream product on to a downstream product among companies in two classes adjacent to one another.

In an example illustrated in Fig. 14, when a target product is A12, a total amount of carbon dioxide emitted until the product A12 is produced can be calculated by totaling $CO_2$ emission corresponding to included products (the upstream products A121 to A123) with $CO_2$ emission corresponding to the product A12. That is, $CO_2$ emission integrated for the product A12 is calculated as follows.

$$I_{A12} = E_{A12} + E_{A121} \times U_{A121} + E_{A122} \times U_{A122} + E_{A123} \times U_{A123} \quad [g]$$

Here, it is assumed that $E_{A121}$, $E_{A122}$, and $E_{A123}$ are respectively $CO_2$ emissions per unit amount at the time when the products A121, A122, and A123 are produced. It is assumed that $U_{A121}$, $U_{A122}$, and $U_{A123}$ are respectively use amounts of the products A121, A122, and A123 used for production of the product A12. The use amounts are an example of a use amount of a material per production amount of a product included in the traceability-related information described above. $CO_2$ emission of a final product (a product of a most downstream company) can be obtained by sequentially executing the above calculation from the product of the most upstream company to the final product.

The same applies when the target product is the product A1. When the target product is A1, a total amount of carbon dioxide emitted in a manufacturing activity until the product A1 is produced can be calculated by integrating $CO_2$ emission corresponding to the product A1 and $CO_2$ emissions corresponding to the products A11, A12, A13, and A14, which are the included product.

An integrated value may be stored in the storage unit 12 in correlation with the products or may be included in a part of product information. That is, product information corresponding to the product A12 may retain both of $E_{A12}$, which is emission in a process alone, and $I_{A12}$, which is emission after the integration.

Traceability-related information after the integration is used again when integration is carried out for a downstream product. By executing this processing in respective classes starting from most upstream, traceability-related information (for example, a cumulative value of $CO_2$ emissions) is sequentially passed on in the downstream direction. Finally, since the traceability-related information is passed on to the final product, it is possible to obtain traceability-related information (for example, total emission of $CO_2$) corresponding to an entire period until the final product is produced.

As described above, when information concerning a product tree is generated, the information provision unit 114 may repeatedly execute processing for sequentially integrating, from most upstream toward most downstream, traceability-related information defined in respective kinds of product information. Note that, in the example described above, the emissions of carbon dioxide are exemplified as the target of the integration. However, the traceability-related information, which is the target of the integration, may be a recycling rate concerning a predetermined material, a score concerning due diligence, or the like. Note that, when the traceability-related information is a numerical value, the integration may be performed by numerical value calculation or, when the traceability-related information is information (for example, due diligence-related information) other than the numerical value, the integration may be mere information collection.

In another example, the product information may include information indicating a location of traceability-related information of a product corresponding to the product information (hereinafter, "location information". Typically, an address, a pointer, or the like). In this case, the traceability-related information may not be included in the product information. The integration may be collecting the location information included in the product information.

The information provision unit 114 may output the generated product tree in an image format. At the same time, the information provision unit 114 may output traceability-related information corresponding to any product.

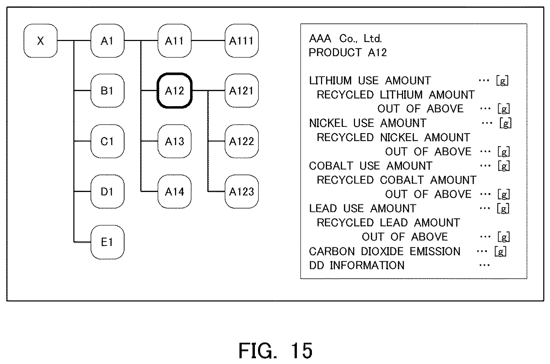

Fig. 15 is an example of a screen onto which a product tree is output by an image. The illustrated screen includes an image illustrating, with a tree diagram, a supply relation among a plurality of products constituting a final product. By selecting any product, it is possible to view traceability-related information corresponding to the product or an integration result of traceability-related information corresponding to an entire period until the product is produced (for example, a total value of emissions of carbon dioxide from most upstream). Such information can be output via the input and output device 14 included in the server apparatus 1 based on operation of the operator of the server apparatus 1.

Further, in response to a request from the company terminal 2 (the information acquisition unit 214), the information provision unit 114 may provide the generated product tree to the company terminal 2. Note that, in some case, it is inappropriate to disclose the entire product tree to a specific company. Thus, when providing the product tree to the company terminal 2 corresponding to a certain company, the information provision unit 114 may perform processing for not disclosing a range in which access authority from the company is absent.

For example, in the example illustrated in Fig. 15, it is assumed that the information provision unit 114 receives a disclosure request for a product tree from the company terminal 2 corresponding to a company that produces the product A12. Here, it is assumed that access authority is imparted to the company only for the products A121, A122, and A123. That is, the company cannot access the three products and product information other than A1, which is the downstream product. In this case, the information provision unit 114 provides, to the company terminal 2, a product tree in which information concerning the products without access authority are not disclosed.

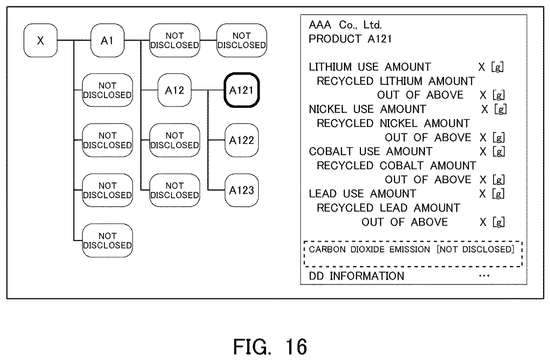

Fig. 16 is an example of a product tree in the case in which products without access authority are not disclosed. In the present example, the product tree is displayed in a state in which, for the products not disclosed, detailed information (or presence itself of the products) is concealed.

Note that, in a case in which, for example, presence of products is disclosed but access authority is not imparted to only a specific item in product information corresponding to the product, concealing processing is performed on only the specific item as indicated by a dotted line in the figure. In the illustrated example, it is indicated that emission of carbon dioxide at the time when the product A121 is produced is not disclosed.

On the other hand, even when a product (or an item) without access authority is present in the tree, the integration of the traceability-related information described above is executed without being affected by the presence of the product (or the item). For example, in the illustrated example, emission of carbon dioxide for the product A121 is not disclosed but this does not affect processing for calculating total emission of carbon dioxide for the product A12.

[Processing flow]

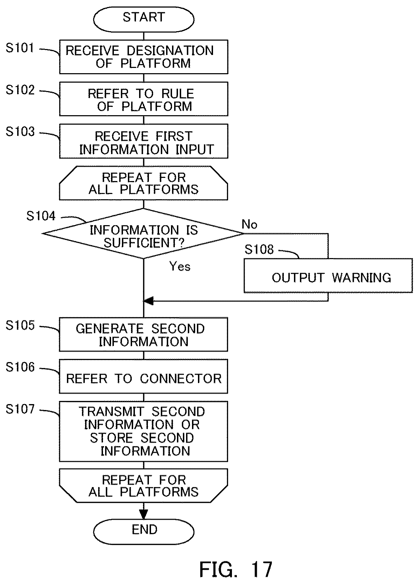

Subsequently, a flow of processing executed by the company terminal 2 when product information of the own company is registered by the company terminal 2 is described with reference to Fig. 17. Fig. 17 is a flowchart of processing for registering second information in a platform. This routine is executed with predetermined input by the operator as a trigger.

In step S101, the second product information generation unit 216 receives designation of a platform, which is a transmission destination of product information. As described with reference to Fig. 12, the second product information generation unit 216 receives designation of a platform via the operator. Note that the operator can also designate a plurality of platforms. In this case, the second product information generation unit 216 receives designation of a plurality of platforms.

In step S102, the second product information generation unit 216 refers to rule information corresponding to the designated platform. When a plurality of platforms are designated, the second product information generation unit 216 refers to rule information for each of the platforms. Note that timing for referring to the rule information is not limited to timing when step S102 is executed. The second product information generation unit 216 only has to refer to the rule information at any timing before the rule information is used.

In step S103, the product information generation unit 211 receives input of product information (first information) of the own company. As described with reference to Fig. 8, the product information generation unit 211 receives input of the product information (the first information) via the operator. The first information is typically the information illustrated in Fig. 8 but an input item is not limited to this information. For example, the input item may be determined according to the designated platform. When the product information is input, the product information may be input in any input format or may be input in an input format corresponding to the designated platform. When a plurality of platforms are designated, the product information may be input in an input format corresponding to any one of the platforms. Note that the processing in step S101 and step S103 may be executed on one screen. The processing in step S101 and step S103 may be executed by the operator selecting the processing from a list on the screen. The processing in step S103 may be executed before the processing in step S101.

Processing in step S104 to step S107 described below is repeatedly executed for all the platforms designated in step S101. In step S104, the second product information generation unit 216 determines whether the first information is sufficient. Since requested information is different depending on a designated platform, the second product information generation unit 216 determines whether information required in the designated platform is input. Information required in the platforms is included in the rule information. The second product information generation unit 216 determines whether the first information is sufficient with reference to the rule information. When affirmatively determining in step S104, the second product information generation unit 216 proceeds to step S105. When negatively determining in step S104, the second product information generation unit 216 proceeds to step S108.

In step S108, the second product information generation unit 216 outputs a warning indicating that information is insufficient. According to the output of the warning, an image indicating that the information is insufficient is displayed on a screen of the input and output device 24 of the company terminal 2. Note that, if the operator performs predetermined input for the warning, the second product information generation unit 216 may return to step S103 and receive input of the first information again. The warning may be a warning about generating second information while the information remains insufficient. When the processing in step S108 is completed, the second product information generation unit 216 proceeds to step S105. Note that, when the information is insufficient, the second product information generation unit 216 may be configured not to generate second information. The processing in step S104 and step S108 can also be omitted.

In step S105, the second product information generation unit 216 generates second information. The second product information generation unit 216 refers to rule information and converts the first information into second information according to the rule information. The second product information generation unit 216 converts the first information into second information using a conversion formula included in the rule information. The generated second information is passed to the connector unit 215.

In step S106, the connector unit 215 refers to a connector. The connector unit 215 selects, referring to the connector information stored in the storage unit 22, a connector corresponding to the platform designated in step S101. Note that, when a plurality of platforms are designated in step S101, the connector unit 215 selects a connector referring to the connector information for each of the platforms.

In step S107, the connector unit 215 transmits the second information. When a plurality of platforms are designated, the connector unit 215 transmits, for each of the platforms, second information corresponding to the platform. Note that, instead of the transmission of the second information by the connector unit 215, the second product information generation unit 216 may arrange (store) the generated second information in a predetermined storage region of the storage unit 22. The connector unit 215 may disclose the second information arranged in the storage unit 22 in response to a request from the server apparatus 1 or another company terminal 2.

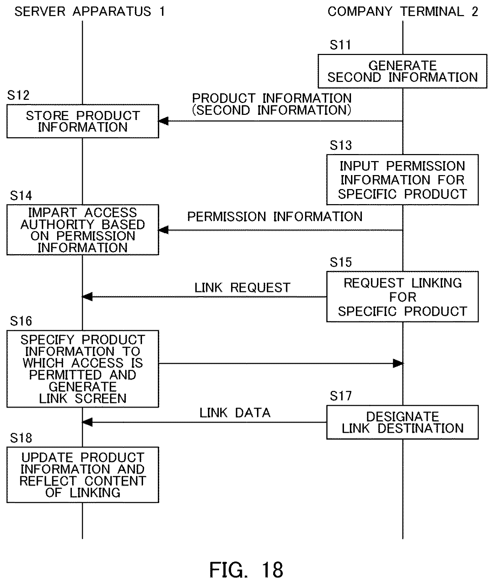

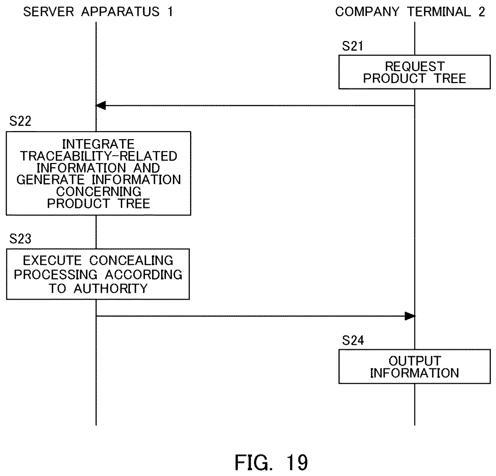

Subsequently, a flow of processing executed by the server apparatus 1 and the company terminal 2 when product information of the own company is registered by the company terminal 2 is described with reference to Fig. 18 and Fig. 19. Fig. 18 is a sequence diagram corresponding to the first to third phases described above. This processing is executed for each of the server apparatuses 1 that have transmitted the second information.

In an example, interaction between the server apparatus 1 and the company terminal 2 is started when operators of companies log in to the server apparatus 1 via the company terminals 2 using accounts of the companies corresponding to the company terminals 2. In the present example, it is assumed that the operators of the companies log in to the server apparatus 1 using accounts of the own companies.

First, in step S11, the second product information generation unit 216 of the company terminal 2 generates second information and the connector unit 215 of the company terminal 2 transmits the generated second information to the server apparatus 1 as product information. The transmitted product information is received by the server apparatus 1 (the information collection unit 111) and stored in the storage unit 12 (step S12). At this time, the information collection unit 111 stores the product information in a storage region where access authority is imparted to only a company that produces a product corresponding to the product information.

Subsequently, in step S13, the authority setting unit 212 of the company terminal 2 receives, via the operator, information (permission information) for designating a downstream company that is permitted to access the product information transmitted in step S11. In this step, the user interface screen described with reference to Fig. 9 may be provided to cause the operator to designate a combination of any product and the downstream company that is permitted to access the product information. The input permission information is transmitted to the server apparatus 1.

In step S14, the authority setting unit 112 of the server apparatus 1 imparts access authority to target product information based on the received permission information. In this step, as described with reference to Fig. 13, the authority setting unit 112 copies the target product information to a storage region where access authority is imparted to a plurality of companies to impart, to any company, access authority to any product information. When a storage region where appropriate access authority is imparted is absent, the authority setting unit 112 may perform processing for generating a storage region anew and imparting access authority to an appropriate company.

Subsequently, in step S15, the link request unit 213 of the company terminal 2 transmits data (a link request) for requesting the server apparatus 1 to link the product information transmitted to the server apparatus 1 with an upstream product. The link request includes a company ID of the own company and a product ID of the target product.

In step S16, the server apparatus 1 (the linking unit 113) generates a list of product information to which access from the target company is permitted and provides a user interface screen including the list to the company terminal 2. In this step, the server apparatus 1 may provide the user interface screen described with reference to Fig. 11 to the company terminal 2 and cause the operator to designate a combination of any product and an upstream product linked with the product.

In step S17, the link request unit 213 of the company terminal 2 receives, from the operator, the designation of the combination of the target product and the upstream product linked with the product. The link request unit 213 generates data (link data) indicating a correlation between an upstream product and a downstream product and transmits the generated link data to the server apparatus 1.

In step S18, the linking unit 113 of the server apparatus 1 updates the stored product information based on the link data and reflects link content between the pieces of product information. The linking between the pieces of product information may be performed by storing information (an identifier, a pointer, or the like) concerning the upstream product in link-related information included in product information of the downstream product.

Note that, when a downstream company is absent, the processing in steps S13 and S14 may be omitted. Similarly, when an upstream company is absent (when a link destination is absent for the target product), instead of requesting linking between the pieces of product information, the linking unit 113 may execute the processing for setting the termination flag described above. In this case, the processing in steps S15 to S18 described above is omitted.

Fig. 19 is a sequence diagram corresponding to the fourth phase described above. First, in step S21, the information acquisition unit 214 of the company terminal 2 requests the server apparatus 1 to provide a product tree. The request includes, for example, an identifier of a target product. The target product may be a final product or may be a product (an intermediate product) other than the final product.

The server apparatus 1 (the information provision unit 114), which receives the request, generates information concerning a product tree according to the processing described above (step S22). At this time, the information provision unit 114 executes processing for integrating, from most upstream to most downstream, traceability-related information defined in respective kinds of product information. A result of the integration may be reflected on the respective kinds of product information.

Subsequently, in step S23, the server apparatus 1 executes, based on access authority of a target company, processing for concealing information for which access authority is not imparted. For example, when presence itself of product information of other companies is not disclosed to a certain company, the server apparatus 1 may execute processing for concealing the presence of the product information. When only a specific item included in the product information is not disclosed, the server apparatus 1 may execute processing for concealing content of the item. Information concerning a product tree subjected to the concealing processing is provided to the company terminal 2 (the information acquisition unit 214) and output (step S24).

As described above, in the present embodiment, it is possible to convert product information input in the company terminal 2 respectively into second information corresponding to platforms and transmit the second information to the server apparatus 1. With such a configuration, it is possible to save labor and time of the operator for inputting information when registering product information.

<Second Embodiment>

In a second embodiment when an insufficient item is present in first information, the item is supplemented by inventory data to generate second information. The inventory data is data corresponding to platforms and is data used as data substituting actual data. The inventory data is, for example, data provided by first platforms. The inventory data may be, for example, data specifying representative values for each of items. By supplementing the second information using the inventory data, it is possible to input data to all items requested to be input. The second product information generation unit 216 may acquire the inventory data from the server apparatuses 1 of the platforms and store the inventory data in the storage unit 22 or may acquire the inventory data from the server apparatuses 1 of the platforms when generating the second information. The inventory data may be provided from a server apparatus different from the server apparatuses 1 of the platforms.

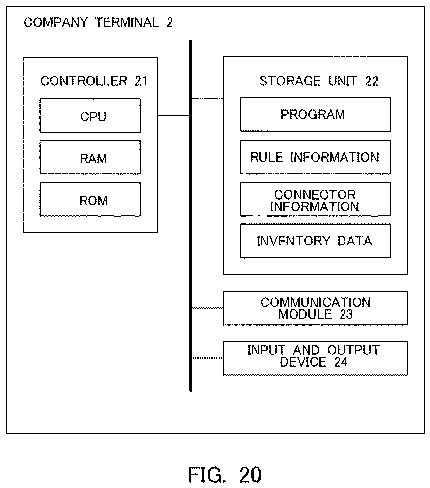

Fig. 20 is a diagram schematically illustrating an example of a hardware configuration of the company terminal 2 according to the present embodiment. Inventory data corresponding to the platforms is stored in the storage unit 22 of the company terminal 2. Since other components are the same as the components illustrated in Fig. 5, description about the other components is omitted.

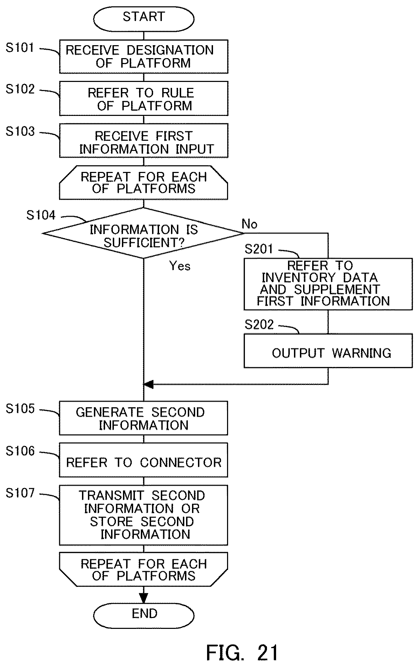

Subsequently, a flow of processing executed by the company terminal 2 in the case in which product information of the own company is registered by the company terminal 2 is described with reference to Fig. 21. Fig. 21 is a flowchart of processing for registering second information in a platform. This routine is executed with predetermined input by an operator as a trigger. Description is omitted for steps in which the same processing as the processing of the routine illustrated in Fig. 17 is executed.

In the routine illustrated in Fig. 21, when negatively determining in step S104, the second product information generation unit 216 proceeds to step S201. In step S201, the second product information generation unit 216 supplements first information referring to inventory data. The second product information generation unit 216 refers to inventory data of a platform corresponding to the first information, extracts data corresponding to items not input yet among items requested to be input in a target platform, and adds the extracted data to the first information to supplement the first information.

In step S202, the second product information generation unit 216 outputs a warning indicating that the first information has been supplemented with the inventory data. According to the output of the warning, an image indicating that the first information has been supplemented is displayed on, for example, the screen of the input and output device 24 of the company terminal 2. Note that the processing in step S202 can also be omitted.

As described above, according to the present embodiment, even if insufficiency occurs in first information input by a user, the first information can be supplemented with the inventory data. Therefore, it is possible to ensure traceability in a platform corresponding to the first information.

<Third Embodiment>

In a third embodiment, information designated as confidentiality and information prohibited by law from being disclosed are prevented from being transmitted to the server apparatus 1. Here, confidential information is sometimes included in first information. It is likely that a company suffers a disadvantage by disclosing the confidential information. The first information sometimes includes information prohibited by law from being disclosed. Thus, in items including these kinds of information, the information is deleted to generate second information. Note that the items in which the information is deleted may be supplemented with inventory data. Note that the information designated as confidentiality is an example of third information. The information prohibited by law from being disclosed is an example of fourth information.

The information designated as confidentiality and the information prohibited by law from being disclosed are included in, for example, rule information. The designation as confidentiality may be performed by, for example, an operator of the company terminal 2 or may be performed based on a rule or the like included in the rule information. The information prohibited by law from being disclosed is determined based on, for example, a location of the company terminal 2. The location of the company terminal 2 may be a location of a target company. Information concerning the law is stored in the storage unit 22 in advance.

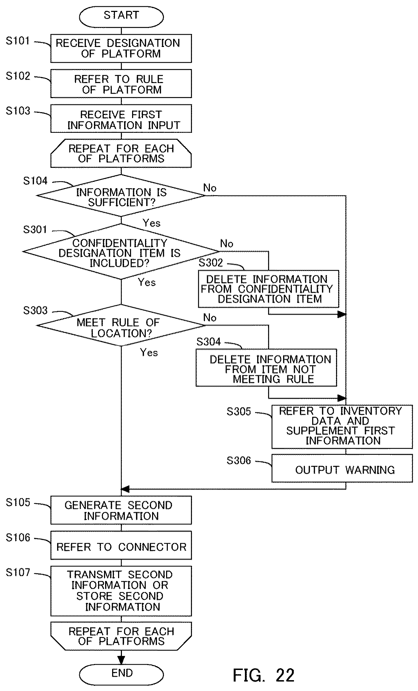

Subsequently, a flow of processing executed by the company terminal 2 in the case in which product information of own company is registered by the company terminal 2 is described with reference to Fig. 22. Fig. 22 is a flowchart of processing for registering second information in a platform. This routine is executed with predetermined input by an operator as a trigger. Note that description is omitted for steps in which the same processing as the processing of the routine illustrated in Fig. 17 is executed.

In the routine illustrated in Fig. 22, when affirmatively determining in step S104, the second product information generation unit 216 proceeds to step S301 and, when negatively determining in step S104, the second product information generation unit 216 proceeds to step S305. In step S301, the second product information generation unit 216 determines whether a confidentiality designation item is included in the first information. The second product information generation unit 216 refers to the rule information and determines whether the first information includes an item designated as confidentiality. When affirmatively determining in step S301, the second product information generation unit 216 proceeds to step S303 and, when negatively determining in step S301, the second product information generation unit 216 proceeds to step S302. In step S302, the second product information generation unit 216 deletes information input to the item designated as confidentiality.

In step S303, the second product information generation unit 216 determines whether the first information meets a rule of the location of the company terminal 2. The second product information generation unit 216 refers to the rule information and determines whether the first information includes, for example, an item prohibited by law from being disclosed. When affirmatively determining in step S303, the second product information generation unit 216 proceeds to step 5105 and, when negatively determining in step S303, the second product information generation unit 216 proceeds to step S304. In step S304, the second product information generation unit 216 deletes information input to an item not meeting the law.

In step S305, the second product information generation unit 216 supplements the first information referring to inventory data. The second product information generation unit 216 refers to inventory data of a platform corresponding to the first information, extracts data corresponding to items not input yet among items requested to be input in a target platform, and adds the extracted data to the first information to supplement the first information. The items not input yet include the item in which the information is deleted in step S302 or step S304. Note that the processing in step S305 can also be omitted. In this case, second information may be generated while keeping the items not input yet as not being input or the processing may be ended without generating second information.

In step S306, the second product information generation unit 216 outputs a warning indicating that the first information has been supplemented with the inventory data. According to the output of the warning, an image indicating that the first information has been supplemented is displayed on, for example, the screen of the input and output device 24 of the company terminal 2. At this time, when the information is deleted in step S302, the second product information generation unit 216 may cause the input and output device 24 to display an image indicating that confidential information has been deleted. When the information is deleted in step S304, the second product information generation unit 216 may cause the input and output device 24 to display an image indicating that the information has been deleted in order to meet the law. Note that the processing in step S306 can also be omitted.

As described above, according to the present embodiment, even when confidential information and information not meeting a law are included in the first information input by the user, it is possible to delete those kinds of information and generate second information. Since the deleted information can be supplemented with the inventory data, it is possible to ensure traceability in a platform corresponding to the first information.

<Fourth Embodiment>

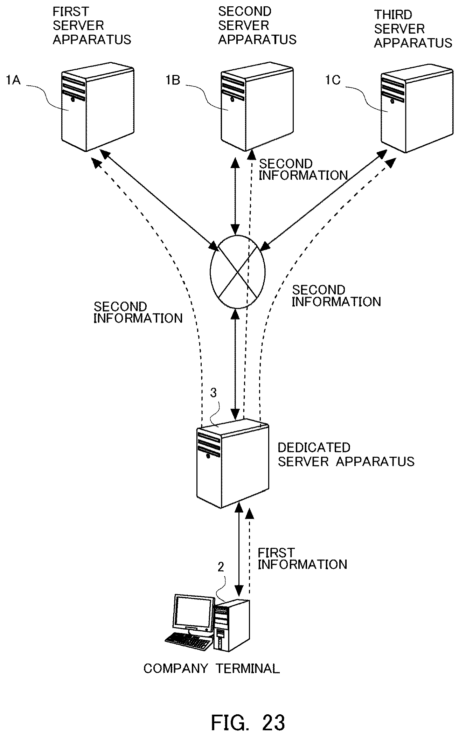

In a fourth embodiment, second information is generated by a server apparatus configured to generate the second information. Fig. 23 is a diagram illustrating a schematic configuration of a system in the case in which second information is generated by a dedicated server apparatus 3. In Fig. 23, a first server apparatus 1A, a second server apparatus 1B, and a third server apparatus 1C are respectively server apparatuses 1 of different platforms. First information is transmitted from the company terminal 2 to the dedicated server apparatus 3 and second information is generated in the dedicated server apparatus 3. Then, the second information is transmitted from the dedicated server apparatus 3 to the first server apparatus 1A, the second server apparatus 1B, and the third server apparatus 1C. Note that, in the following description, when the first server apparatus 1A, the second server apparatus 1B, and the third server apparatus 1C are not distinguished, the first server apparatus 1A, the second server apparatus 1B, and the third server apparatus 1C are simply referred to as server apparatus 1.

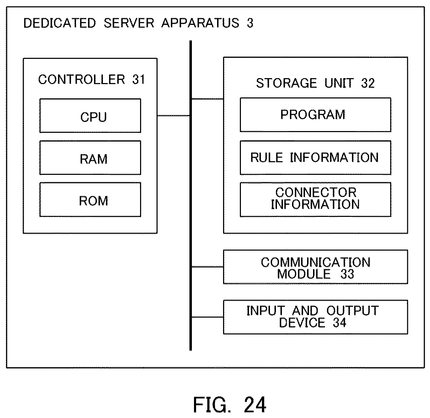

Fig. 24 is a diagram schematically illustrating an example of a hardware configuration of the dedicated server apparatus 3 according to the present embodiment. The dedicated server apparatus 3 is a dedicated server that transmits second information to platforms. Note that the dedicated server apparatus 3 may be configured to be capable of performing processing other than transmitting the second information to the platforms. The dedicated server apparatus 3 is configured as a computer including a controller 31, a storage unit 32, a communication module 33, and an input and output device 34. Description about these hardware components is omitted because the hardware components are the same as the controller 21, the storage unit 22, the communication module 23, and the input and output device 24 of the company terminal 2.

Note that, in a specific hardware configuration of the dedicated server apparatus 3, as in the company terminal 2, omission, substitution, and addition of components are possible as appropriate according to an embodiment.

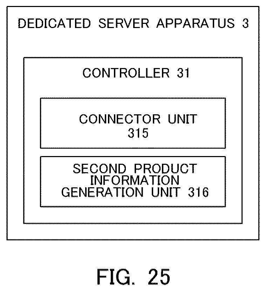

Fig. 25 is a diagram schematically illustrating a software configuration of the dedicated server apparatus 3 according to the present embodiment. In the present embodiment, the controller 31 is configured to include two software modules of a connector unit 315 and a second product information generation unit 316. The software modules may be implemented by programs stored in the storage unit 32 being executed by the controller 31 (a CPU). Note that information processing executed by the connector unit 315 and the second product information generation unit 316 described below is synonymous with information processing executed by the controller 31.

The connector unit 315 includes an application used for communication concerning a platform. Communication between the dedicated server apparatus 3 and the server apparatus 1 may be performed via the connector unit 315. Communication between the dedicated server apparatus 3 and the company terminal 2 may be performed via the connector unit 315 or may be performed not via the connector unit 315. Description about a configuration of the connector unit 315 is omitted because the configuration is the same as the configuration of the connector unit 215 of the company terminal 2 described in the first embodiment.

The second product information generation unit 316 is configured to receive product information (first information) generated by the product information generation unit 211 of the company terminal 2 and convert the product information (the first information) into product information (second information) corresponding to platforms. The second product information generation unit 316 receives designation of a platform from the company terminal 2. At this time, the second product information generation unit 316 generates a user interface including a list of platforms to be transmission destinations of the product information and transmits the generated user interface to the company terminal 2. As illustrated in Fig. 12, the second product information generation unit 316 is configured to receive, for any own product, designation of a platform to which the second information is transmitted.

The second product information generation unit 316 acquires information concerning a rule (rule information) corresponding to the designated platform. The second product information generation unit 316 obtains second information by converting the first information with, for example, a conversion formula. This second information is generated for each of the platforms.

The second product information generation unit 316 is configured to transmit the second information to the server apparatus 1 at any timing. This second information is transmitted via the connector unit 315. The server apparatus 1, which receives the second information, also receives the second information via the connector unit 115.

Processing in the case in which the second information is registered by the dedicated server apparatus 3 can be considered the same as the flowchart illustrated in Fig. 17. For example, in step S101, the second product information generation unit 316 receives designation of a platform, which is a transmission destination of the second information. When a platform is designated via the operator in the company terminal 2, information concerning the designated platform is transmitted to the dedicated server apparatus 3. By receiving this information, the second product information generation unit 316 receives the designation of the platform.

In step S102, the second product information generation unit 316 refers to rule information corresponding to the designated platform. Further, in step S103, the second product information generation unit 316 receives product information transmitted from the company terminal 2 and stores the product information in the storage unit 12. Accordingly, the second product information generation unit 316 receives input of the first information. In step S104, the second product information generation unit 316 determines whether the first information is sufficient.

In step S105, the second product information generation unit 316 generates second information. The second product information generation unit 316 converts the first information into second information using, for example, a conversion formula included in the rule information. The generated second information is passed to the connector unit 315. In step S106, the connector unit 315 selects a connector. The connector unit 315 selects, according to connector information stored in the storage unit 32, a connector corresponding to the platform designated in step S101.

In step S107, the connector unit 315 transmits the second information. Note that, instead of the transmission of the second information by the connector unit 315, the second product information generation unit 316 may arrange (store) the generated second information in a predetermined storage region of the storage unit 32. In step S108, the second product information generation unit 316 outputs a warning indicating that information is insufficient.

As described above, the first information can be converted into the second information corresponding to the platforms by the dedicated server apparatus 3.

<Fifth Embodiment>

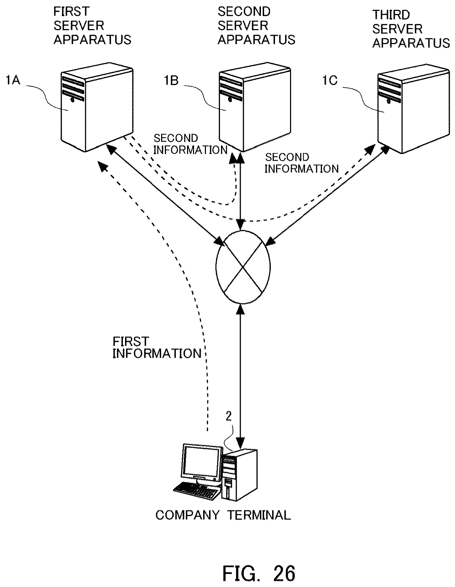

In a fifth embodiment, the server apparatus 1 of a platform generates second information. Fig. 26 is a diagram illustrating a schematic configuration of a system in the case in which second information is generated by the server apparatus 1. In Fig. 26, the first server apparatus 1A, the second server apparatus 1B, and the third server apparatus 1C are respectively the server apparatuses 1 of different platforms. In the following description, an example in which the first server apparatus 1A converts first information into second information is described. Note that, when the first server apparatus 1A, the second server apparatus 1B, and the third server apparatus 1C are not distinguished, the first server apparatus 1A, the second server apparatus 1B, and the third server apparatus 1C are simply referred to as server apparatus 1.

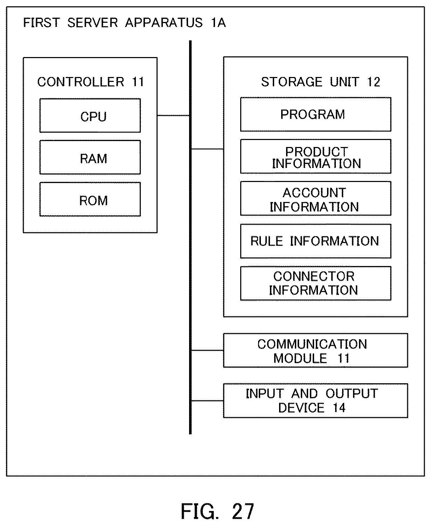

Fig. 27 is a diagram schematically illustrating an example of a hardware configuration of the first server apparatus 1A according to the present embodiment. The first server apparatus 1A is configured as a computer including the controller 11, the storage unit 12, the communication module 13, and the input and output device 14. Note that the second server apparatus 1B and the third server apparatus 1C may be configured the same as the first server apparatus 1A or may be configured the same as the server apparatus 1 described in the first embodiment. Hardware components other than the storage unit 12 are the same as the hardware components in the first embodiment. Therefore, description is omitted about the hardware components other than the storage unit 12.

The storage unit 12 is means for storing information and is configured by a storage medium such as a RAM, a magnetic disk, or a flash memory. In the storage unit 12, programs to be executed by the controller 11, data used by the programs, and the like are stored. A database is constructed in the storage unit 12. In the database, product information collected from a plurality of company terminals 2, account information concerning companies, rule information concerning a rule of input of product information, connector information concerning connectors corresponding to platforms, and the like are stored. The product information and the account information are the same as the product information and the account information stored in the storage unit 12 of the server apparatus 1 in the first embodiment. The rule information and the connector information are the same as the rule information and the connector information stored in the storage unit 22 of the company terminal 2 in the first embodiment.

Note that, in a specific hardware configuration of the server apparatus 1, omission, substitution, and addition of components are possible as appropriate according to an embodiment. For example, the controller 11 may include a plurality of hardware processors. The hardware processors may be configured by a microprocessor, an FPGA, a GPU, and the like. The input and output device 14 may be omitted or an input and output device (for example, an optical drive) other than the exemplified one may be added. The server apparatus 1 may be configured by a plurality of computers. In this case, hardware configurations of the computers may coincide or may not coincide.

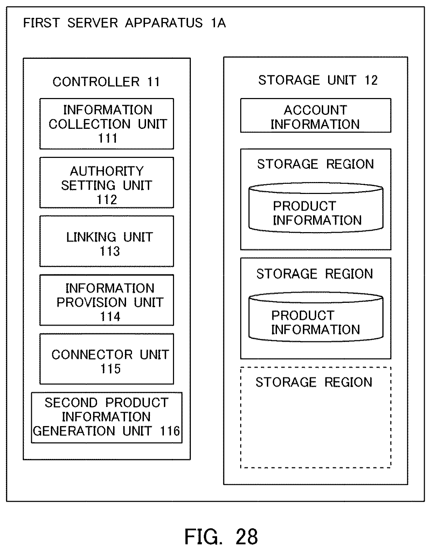

Fig. 28 is a diagram schematically illustrating an example of a software configuration of the first server apparatus 1A according to the present embodiment. In the present embodiment, the controller 11 is configured to include six software modules of the information collection unit 111, the authority setting unit 112, the linking unit 113, the information provision unit 114, the connector unit 115, and a second product information generation unit 116. The software modules may be implemented by programs stored in the storage unit 12 being executed by the controller 11 (a CPU). Note that information processing executed by the information collection unit 111, the authority setting unit 112, the linking unit 113, the information provision unit 114, the connector unit 115, and the second product information generation unit 116 described below are synonymous with the information processing executed by the controller 11.

Description is omitted about the information collection unit 111, the authority setting unit 112, the linking unit 113, the information provision unit 114, and the connector unit 115 because the information collection unit 111, the authority setting unit 112, the linking unit 113, the information provision unit 114, and the connector unit 115 are the same as those in the first embodiment.

Note that the product information generation unit 211 of the company terminal 2 according to the present embodiment is configured to acquire first information via an operator of the company terminal 2 and transmit the first information to the first server apparatus 1A at any timing.

The second product information generation unit 116 is configured to convert the first information received by the information collection unit 111 into product information (second information) corresponding to platforms. The second product information generation unit 116 receives designation of a platform from the company terminal 2. The second product information generation unit 116 generates a user interface including a list of platforms to be transmission destinations of the product information and transmits the generated user interface to the company terminal 2. As illustrated in Fig. 12, the second product information generation unit 116 is configured to receive, for any own product, designation of a platform to which the product information is transmitted.

The second product information generation unit 116 acquires information (rule information) concerning a rule corresponding to the designated platform. This rule information may be acquired from the second server apparatus 1B and the third server apparatus 1C, may be stored in the storage unit 12, or may be acquired from a server apparatus different from the server apparatus 1 of the platform. The second product information generation unit 116 obtains second information by converting the first information with, for example, a conversion formula. This second information is generated for each of the platforms. When the first product information received from the company terminal 2 by the information collection unit 111 does not meet a rule of the first server apparatus 1A, the second product information generation unit 116 may generate second information corresponding to the first server apparatus 1A and store the second information in the storage unit 12 of the first server apparatus 1A.

The second product information generation unit 116 is configured to transmit the second information to the second server apparatus 1B and the third server apparatus 1C at any timing. This second information is transmitted via the connector unit 115. The second server apparatus 1B and the third server apparatus 1C, which receive the second information, also receive the second information via the connector unit 115.

Processing in the case in which the second information is registered by the first server apparatus 1A can be considered the same as the flowchart illustrated in Fig. 17. For example, in step S101, the second product information generation unit 116 receives designation of a platform, which is a transmission destination of the second information. When a platform is designated via the operator in the company terminal 2, information concerning the designated platform is transmitted to the first server apparatus 1A. By receiving this information, the second product information generation unit 116 receives the designation of the platform.

In step S102, the second product information generation unit 116 refers to rule information corresponding to the designated platform. Further, in step S103, the information collection unit 111 receives product information transmitted from the company terminal 2 and stores the product information in the storage unit 12. Accordingly, the second product information generation unit 116 receives input of the first information. In step S104, the second product information generation unit 116 determines whether the first information is sufficient.

In step S105, the second product information generation unit 116 generates second information. The second product information generation unit 116 converts the first information into second information using, for example, a conversion formula included in the rule information. The generated second information is passed to the connector unit 115. In step S106, the connector unit 115 selects a connector. The connector unit 115 selects, according to connector information stored in the storage unit 12, a connector corresponding to the platform designated in step S101.

In step S107, the connector unit 115 transmits the second information. Note that, instead of the transmission of the second information by the connector unit 115, the second product information generation unit 116 may arrange (store) the generated second information in a predetermined storage region of the storage unit 12. In step S108, the second product information generation unit 116 outputs a warning indicating that information is insufficient.

As described above, the first information can be converted into the second information corresponding to the platforms by the server apparatus 1 as well.

<Sixth Embodiment>

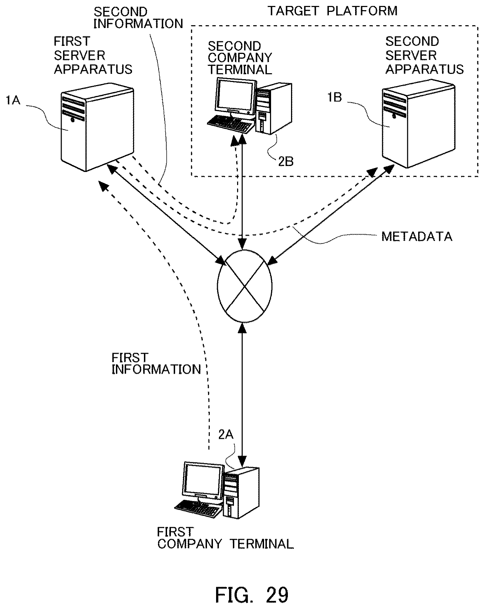

In a sixth embodiment, an example in which second information is provided to a platform (hereinafter referred to as "target platform" as well) configured to include a server apparatus that manages metadata of a product (hereinafter referred to as product metadata as well) and a company terminal is described. Fig. 29 is a diagram illustrating a schematic configuration of a system in the case in which the second information is provided to the target platform. In Fig. 29, the first server apparatus 1A and the second server apparatus 1B are respectively server apparatuses 1 of different platforms.

In the sixth embodiment, the server apparatus 1 generates second information as in the fifth embodiment. The server apparatus 1 that generates this second information is hereinafter referred to as "first server apparatus 1A". On the other hand, the server apparatus 1 that belongs to the target platform and manages the product metadata is hereinafter referred to as "second server apparatus 1B". The company terminal 2 that transmits first information to the first server apparatus 1A is hereinafter referred to as "first company terminal 2A". The company terminal 2 that belongs to the target platform is hereinafter referred to as "second company terminal 2B". Note that, when the first server apparatus 1A and the second server apparatus 1B are not distinguished in the following description, the first server apparatus 1A and the second server apparatus 1B are simply referred to as server apparatus 1. When the first company terminal 2A and the second company terminal 2B are not distinguished, the first company terminal 2A and the second company terminal 2B are simply referred to as company terminal 2. Note that the target platform is an example of a first platform.

A plurality of second company terminals 2B belong to the target platform. Product information of an own product is stored in the storage units 22 of the second company terminals 2B. When the product information is acquired in the target platform, the second company terminal 2B accesses the second server apparatus 1B and acquires a URL accessible to the product information. When the URL is accessed, the product information can be acquired from the second company terminal 2B corresponding to the product. In this way, the product information is transmitted and received between the second company terminals 2B. The first server apparatus 1A according to the sixth embodiment is configured to perform the same operation as the operation of the second company terminal 2B in the target platform.

The first server apparatus 1A acquires first information from the first company terminal 2A and generates product metadata from the first information according to a rule of the target platform and stores the product metadata in the storage unit 12. The first server apparatus 1A registers this product metadata in the second server apparatus 1B of the target platform. The first server apparatus 1A generates second information from the first information according to the rule of the target platform and stores this second information in the storage unit 12. The first server apparatus 1A provides the second information in response to a request from the second company terminal 2B of the target platform.

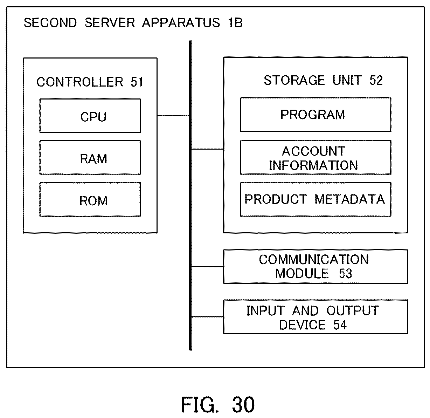

The first server apparatus 1A in the sixth embodiment includes the same hardware configuration and the same software configuration as the hardware configuration and the software configuration of the first server apparatus 1A in the fifth embodiment. On the other hand, Fig. 30 is a diagram schematically illustrating an example of a hardware configuration of the second server apparatus 1B according to the sixth embodiment. The second server apparatus 1B is configured as a computer including a controller 51, a storage unit 52, a communication module 53, and an input and output device 54. The controller 51, the communication module 53, and the input and output device 54 of the second server apparatus 1B are the same as the controller 11, the communication module 13, and the input and output device 14 of the first server apparatus 1A in the sixth embodiment. The storage unit 52 of the second server apparatus 1B is means for storing information and is configured by a storage medium such as a RAM, a magnetic disk or a flash memory. In the storage unit 52, programs to be executed by the controller 51, data used by the programs, and the like are stored. A database is constructed in the storage unit 52. In the database, product metadata collected from a plurality of company terminals 2 and the server apparatus 1 and account information concerning companies are stored. The product metadata is metadata concerning products and is configured to include, for example, product IDs corresponding to the products and URLs (Uniform Resource Locators) accessible to product information of the products.

The first company terminal 2A and the second company terminal 2B have the same configuration as the hardware configuration of the company terminal 2 illustrated in Fig. 5. Note that it is unnecessary to cause the storage units 22 of the first company terminal 2A and the second company terminal 2B to store rule information. In specific hardware configuration of the server apparatus 1 and the company terminal 2, omission, substitution, and addition of components are possible as appropriate according to an embodiment. A software configuration of the first company terminal 2A is the same as the configuration illustrated in Fig. 7. However, the second product information generation unit 216 can be omitted.

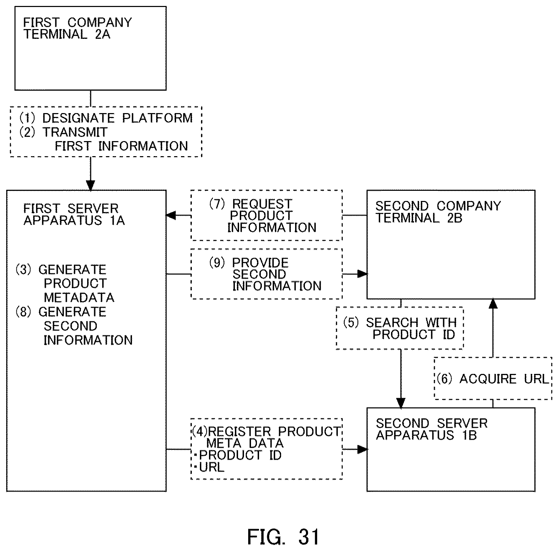

Fig. 31 is a diagram illustrating an overview of processing executed by the server apparatus 1 and the company terminal 2 when second information is directly transmitted to the company terminal 2. In Fig. 31, the first server apparatus 1A and the second server apparatus 1B are respectively server apparatuses 1 of different platforms. The second company terminal 2B belongs to the same target platform as a target platform to which the second server apparatus 1B belongs. When second information is provided to the target platform configured to include the second server apparatus 1B and the second company terminal 2B as described above, the first server apparatus 1A directly transmits the second information to the second company terminal 2B. In the example illustrated in Fig. 31, processing is performed in order from (1) to (9).

As indicated by (1) in Fig. 31, the second product information generation unit 116 of the first server apparatus 1A receives designation of a platform from the first company terminal 2A. The second product information generation unit 116 generates a user interface including a list of platforms to be transmission destinations of product information and transmits the generated user interface to the first company terminal 2A. The second product information generation unit 116 is configured to receive, from the first company terminal 2A, designation of a platform to which the product information is transmitted. Note that, as another example, the product information generation unit 211 of the first company terminal 2A may generate a user interface including a list of platforms to be transmission destinations of the product information. The product information generation unit 211 may be configured to acquire first information via an operator of the first company terminal 2A and transmit the first information to the first server apparatus 1A at any timing. The first server apparatus 1A and the first company terminal 2A perform communication via the connector unit 115 and the connector unit 215.

As indicated by (2) in Fig. 31, the information collection unit 111 of the first server apparatus 1A receives first information transmitted from the first company terminal 2A and stores the first information in the storage unit 12. Accordingly, the first information is acquired. As described with reference to Fig. 8, the product information generation unit 211 of the first company terminal 2A receives input of product information (first information) via the operator. When the product information is input, the product information may be input in any input format or may be input in an input format corresponding to a designated platform. The product information may be input according to a rule of the designated platform. When a plurality of platforms are designated, the product information may be input in an input format corresponding to any one of the platforms. Note that the designation of the platform and the input of the first information may be executed on one screen. The connector unit 215 of the first company terminal 2A transmits, to the first server apparatus 1A, the first information generated by the product information generation unit 211 of the first company terminal 2A. The information collection unit 111 of the first server apparatus 1A acquires the first information via the connector unit 115.

As indicated by (3) in Fig. 31, the second product information generation unit 116 of the first server apparatus 1A generates product metadata from the first information. The second product information generation unit 116 of the first server apparatus 1A acquires information concerning a rule (rule information) corresponding to a designated target platform. This rule information may be acquired from the second server apparatus 1B, may be stored in the storage unit 12, or may be acquired from a server apparatus different from the server apparatus 1 of the platform. The product metadata is generated according to the rule of the target platform. The rule at the time when the product metadata is generated is included in the rule information. The second product information generation unit 116 generates, for example, a URL accessible to second information corresponding to the first information, generates product metadata in linkage with a product ID, and causes the storage unit 12 to store the product metadata.

As indicated by (4) in Fig. 31, the connector unit 115 of the first server apparatus 1A registers the product metadata in the target platform by transmitting the product metadata to the second server apparatus 1B. In this way, when the product metadata is transmitted to the second server apparatus 1B, the product metadata is transmitted via the connector unit 115. The product metadata includes a ULR accessible to the product information and a product ID. The controller 51 of the second server apparatus 1B stores the received product metadata in the storage unit 52. In this way, in the target platform, the second company terminal 2B is accessible to second information corresponding to the first company terminal 2A.

Subsequently, when an operator of the second company terminal 2B attempts to acquire product information corresponding to the first company terminal 2A, the controller 21 of the second company terminal 2B receives designation of a product ID via the operator. As indicated by (5) in Fig. 31, the controller 21 of the second company terminal 2B transmits a product ID to the second server apparatus 1B and searches for product metadata corresponding to the product ID. When receiving the product ID, the controller 51 of the second server apparatus 1B refers to the product metadata stored in the storage unit 52 and extracts a URL corresponding to the product ID. Then, as indicated by (6) in Fig. 31, the controller 51 of the second server apparatus 1B transmits the extracted URL to the second company terminal 2B.

As indicated by (7) in Fig. 31, the controller 21 of the second company terminal 2B, which has acquired the URL from the second server apparatus 1B, accesses the acquired URL, and requests product information from the first server apparatus 1A. This request is transmitted via a connector of the second company terminal 2B. The second product information generation unit 116 of the first server apparatus 1A receives this request. When the first server apparatus 1A receives the request for product information from the second company terminal 2B, the connector unit 115 receives the request. The connector unit 115 passes the received request to the second product information generation unit 116.

As indicated by (8) in Fig. 31, the second product information generation unit 116 of the first server apparatus 1A, which has received the request for product information, acquires information concerning a rule (rule information) corresponding to the target platform. This rule information may be acquired from the second server apparatus 1B, may be stored in the storage unit 12, or may be acquired from a server apparatus different from the server apparatus 1 of the platform. The second product information generation unit 116 obtains second information by converting first information corresponding to the URL with, for example, conversion formula. Then, as indicated by (9) in Fig. 31, the connector unit 115 of the first server apparatus 1A transmits the second information corresponding to the URL to the second company terminal 2B. In this way, when the second information is transmitted to the second company terminal 2B, the second information is transmitted via the connector unit 115. Accordingly, the second information is provided to the second company terminal 2B.

Note that timing for generating second information is not limited to timing after the product information is requested from the second company terminal 2B. For example, second information can be generated at any time in a period from when the first information is received from the first company terminal 2A until when the second information is provided to the second company terminal 2B. For example, after the first information is received from the first company terminal 2A, second information may be generated from the first information and the rule information before product metadata is generated. As described in the first embodiment, second information may be generated in the first company terminal 2A. In this case, the second information may be transmitted from the first company terminal 2A to the first server apparatus 1A to cause the storage unit 12 of the first server apparatus 1A to store the second information.

[Processing flow]

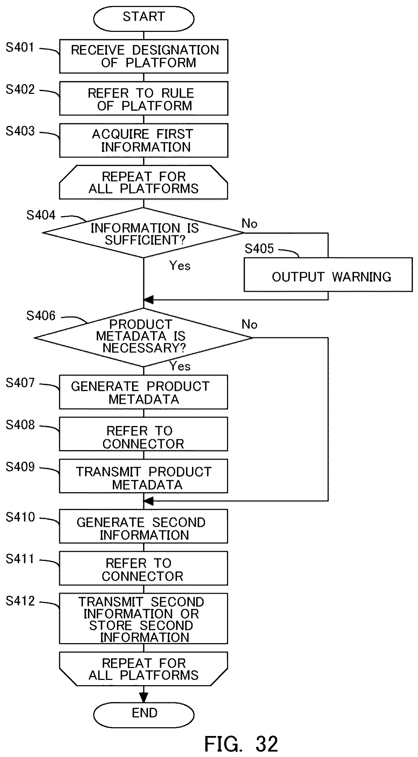

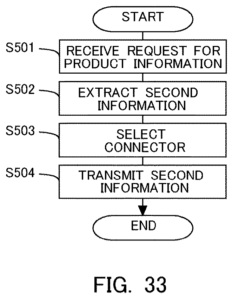

Subsequently, a flow of processing executed in the first server apparatus 1A is described with reference to Fig. 32 and Fig. 33. Fig. 32 is a flowchart of processing for registering product metadata in a target platform. This routine is executed with reception of information concerning designation of a platform from the first company terminal 2A as a trigger.

In step S401, the second product information generation unit 116 receives designation of a platform, which is a transmission destination of second information. When a platform is designated via the operator in the first company terminal 2A, information concerning the designated platform is transmitted from the first company terminal 2A to the first server apparatus 1A. By receiving this information, the second product information generation unit 116 receives the designation of the platform.

In step S402, the second product information generation unit 116 refers to rule information corresponding to the designated platform. Further, in step S403, the information collection unit 111 receives, via the connector unit 115, product information transmitted from the first company terminal 2A and stores the product information in the storage unit 12. Accordingly, input of first information is received. Note that the processing in step S401 and the processing in step S403 may be simultaneously executed. In this case, the designation of a platform and the transmission of the first information are simultaneously performed from the first company terminal 2A. The processing in step S403 may be executed before the processing in step S401.

Processing in step S404 to step S412 described below is repeatedly executed for all platforms designated in step S401. In step S404, the second product information generation unit 116 determines whether first information is sufficient. When negatively determining in step S404, in step S405, the second product information generation unit 116 outputs a warning indicating that the information is insufficient. Note that, when the information is insufficient, as in the second embodiment, the information may be supplemented with inventory data.

In step S406, the second product information generation unit 116 determines whether product metadata is necessary. That is, the second product information generation unit 116 determines whether the designated platform is a target platform. When affirmatively determining in step S406, the second product information generation unit 116 proceeds to step S407 and, when negatively determining in step S406, the second product information generation unit 116 proceeds to step S410.

In step S407, the second product information generation unit 116 generates product metadata. The second product information generation unit 116 refers to rule information corresponding to the target platform. Then, the second product information generation unit 116 generates product metadata according to the rule information. The generated product metadata is passed to the connector unit 115. In step S408, the connector unit 115 selects a connector. The connector unit 115 selects, according to connector information stored in the storage unit 12, a connector corresponding to the target platform designated in step S401. In step S409, the connector unit 115 transmits the product metadata to the second server apparatus 1B corresponding to the target platform.

In step S410, the second product information generation unit 116 generates second information. The second product information generation unit 116 converts the first information into second information using, for example, a conversion formula included in the rule information. The generated second information is passed to the connector unit 115. In step S411, the connector unit 115 selects a connector. The connector unit 115 selects, according to the connector information stored in the storage unit 12, a connector corresponding to the platform designated in step S401.

In step S412, the connector unit 115 transmits the second information. Note that, when a target platform has been designated, the second product information generation unit 116 arranges (stores) the generated second information in a predetermined storage region of the storage unit 12.

Subsequently, Fig. 33 is a flowchart of processing for providing second product information to the second company terminal 2B of the target platform. This routine is executed with reception of a request for product information from the second company terminal 2B as a trigger. In step S501, the second product information generation unit 116 receives a request for product information. This request is a request to transmit product information to the second company terminal 2B. This request is executed by the second company terminal 2B accessing a URL corresponding to a product and performing predetermined input. This request is received by the connector unit 115, passed to the second product information generation unit 116, and received by the second product information generation unit 116.

In step S502, the second product information generation unit 116 extracts the second information arranged in the predetermined storage region of the storage unit 12. Here, since the URL accessed by the second company terminal 2B is linked with a product ID, the second product information generation unit 116 extracts, based on this product ID, second information corresponding to the product ID. The extracted second information is passed to the connector unit 115. In step S503, the connector unit 115 selects a connector. The connector unit 115 selects a connector at the time when the request is received in step S501. In step S504, the connector unit 115 transmits the second information to the second company terminal 2B. In this way, the first server apparatus 1A is capable of behaving in the same manner as the second company terminal 2B in the target platform and providing product information.

Note that, in the flowchart illustrated in Fig. 32, the second information corresponding to the target platform is generated in step S410 and is stored in the storage unit 12 in step S412. However, timing for generating second information is not limited to this. For example, second information may be generated in step S502 of the flowchart illustrated in Fig. 33. That is, second information may be generated after the request for product information is received from the second company terminal 2B.

As described above, according to the sixth embodiment, even in a target platform in which the second server apparatus 1B manages product metadata and the company terminals 2 transmit and receive product information each other, it is possible to convert first information into second information and provide the second information. At this time, it is possible to provide the second information via a connector corresponding to the target platform.

(Other embodiments)

The embodiments described above are only examples. The present disclosure can be changed as appropriate and carried out without departing from the gist of the present disclosure. For example, the processing and the means described in the present disclosure can be freely combined and carried out as long as a technical contradiction does not occur.

In the description of the embodiment, the server apparatus 1 stores the product information in the database. However, the product information may be stored by means other than the database.

In the description of the embodiment, a form in which the server apparatus 1 executes the first to fourth phases to complete the product tree is exemplified. However, the roles of the server apparatus 1 may be distributed and arranged in the plurality of company terminals 2. For example, the product information may be stored by a distributed database that uses a blockchain infrastructure. In this case, a product information database may be configured by the plurality of company terminals 2. In this case, the processing in the phases described above may be executed using a smart contract. For example, the processing in the second phase may be executed with an account of a certain company writing permission information in a database as a trigger. The processing in the third phase may be executed with an account of a certain company writing a link request in a database as a trigger.

In the description of the embodiment, the phase in which the server apparatus 1 receives product information concerning an upstream product and the phase in which the server apparatus 1 receives permission information corresponding to the product information are separately described. However, both of the product information and the permission information may be simultaneously received. Similarly, in the description of the embodiment, the phase in which the server apparatus 1 receives product information concerning a downstream product and the phase in which the server apparatus 1 receives a link request corresponding to the product information are separately described. However, both of the product information and the link request may be simultaneously received.

In the embodiment described above, access control of the companies is implemented by providing the dedicated storage region and the shared storage region. However, a method of implementing the access control is not limited to such an example. Any method may be used for the access control.

In the embodiment described above (Fig. 1), the plurality of companies included in the supply chain are described as the companies that produce products. However, the companies included in the supply chain do not always need to be companies that produce products. For example, companies that perform transportation, import, storage, wholesale, and the like of products may be included in the companies constituting the supply chain. In an example, some companies among the plurality of companies may be companies that do not execute a manufacturing process, such as a trading company, a sales agent, and an import agent, and may receive a product from a company located in an immediately upper class (an upstream company) and deliver the product to a company located in an immediately lower class (a downstream company).

In the embodiment described above, the supply chain of the product relating to an automobile is assumed, the OEM manufacturer is described as the most downstream company and the company that supplies components, materials, assemblies, and the like is described as the supplier. However, the companies belonging to the supply chain are not always limited to these companies. Companies in the classes may be determined as appropriate according to a product and the like. Manufacturing activities carried out in the companies until a final product is obtained may be determined as appropriate according to an embodiment and may include all activities that can be performed until the final product is obtained, such as digging, machining, assembling, transportation, and storage.

In the embodiment described above, the server apparatus 1 is configured to execute the information processing in the first to fourth phases. However, the configuration of the server apparatus 1 may not be limited to such an example. In another example, in the server apparatus 1, the information processing in at least any one of the first to fourth phases may be omitted. The server apparatus 1 may be configured to execute any other information processing.

In the embodiment described above, an example of calculation of $CO_2$ emission (a CFP value) is described. The CFP value may be calculated by the following calculation formula.

CFP value of Tier N-1 = own company measured CFP value of Tier N-1 + CFP value of $\Sigma_k$ (k company (Tier N) $\times$ use amount $u_k$ in Tier N-1)

Here, "CFP value of Tier N-1" indicates a result obtained by integrating a CFP value of an upstream company (k company (Tier N)) and a CFP value of the own company. The own company measured CFP value indicates a CFP value included in product information of the companies. When Tier N is a most upstream company, "CFP value of Tier N" is a CFP value included in product information of the company. In other cases, "CFP value of Tier N" is a result obtained by further integrating a CFP value of an upstream company (Tier N+1) and a CFP value included in product information of the company. By setting Tier N in a most upstream company (a termination company) and repeating the calculation up to N=1, it is possible to obtain a CFP value of a Tier 0 product (=a final product).

In the embodiment described above, the server apparatus 1 may execute calculation of a recycling rate and due diligence (a score) together with or instead of the calculation of the $CO_2$ emission (the CFP value). The recycling rate may be calculated by the following calculation formula.

"(Recycling rate in a Tier N-1 product for a target substance) = {(total use amount in Tier N-1) $\times$ (recycling rate in Tier N-1) + $\Sigma_k$ (total use amount in k company (Tier N) $\times$ recycling rate in k company (Tier N) $\times$ use amount $u_k$ in Tier N-1)} $\div$ {total use amount in Tier N-1 + $\Sigma_k$ (total use amount in k company (Tier N) $\times$ use amount $u_k$ in Tier N-1)} = {recycled material use amount in Tier N-1 + $\Sigma_k$ (recycled material use amount in k company (Tier N) $\times$ use amount $u_k$ in Tier N-1)} $\div$ {total use amount in Tier N-1 + $\Sigma_k$ (total use amount in k company (Tier N) $\times$ use amount $u_k$ in Tier N-1)}"

The recycled material use amount indicates a use amount of a recycled material of a target substance. Like the CFP value, a recycling rate in a final product for the target substance can be calculated by sequentially calculating the recycling rate from a most upstream company (a termination company). The score of due diligence (a DD score) can be integrated by the same calculation as the calculation for the CFP value and the recycling rate. In an example, a DD score (an integration result) in the final product can be obtained by substituting the CFP value with the DD score and sequentially calculating the DD score from the most upstream company (the termination company).

Note that, in the embodiment described above, traceability-related information of the companies (Tier N-1) themselves excluding the most upstream company may not be stored in a shared storage region between the companies and downstream companies of the companies and integration results (CFP values of Tier N-1 and recycling rates in the Tier N-1 product for the target substance) of the companies may be stored in a shared storage region between the companies and downstream companies (Tier N-2) of the companies. Accordingly, it is possible to obtain traceability-related information (an integration result) in the final product without disclosing traceability-related information of the companies themselves.

In the embodiment described above, it is assumed that the companies order a certain material from one company. However, in the embodiment described above, an order form of the companies is not limited to such an example. At least some of the companies belonging to the supply chain may order the same product from a plurality of upstream companies and selectively use obtained upstream products for own products. For example, in the example illustrated in Fig. 14, a product A11_1, a product A11_2, or a product A11_3 in Tier 2 may be selectively used for the product A1 in Tier 1. In this case, the server apparatus 1 may retain a link relation for each of patterns to be used. In the example described above, the server apparatus 1 may retain, for the product A1 in Tier 1, link information like a pattern 1 "the product A11_1 in Tier 2, ···", a pattern 2 "the product A11_2, ···", and a pattern 3 "the product A11_3, ···", According to this, the server apparatus 1 may execute calculation (integration) of the traceability-related information for each of the patterns. In this case, in an example, the server apparatus 1 may output a calculation result for each of the patterns. In another example, the server apparatus 1 may calculate, from the calculation result, statistic amounts such as a maximum value, a minimum value, an average value, a variance, a standard deviation, and a median value and output the calculated statistic amounts.

In the embodiment described above, the traceability-related information (in particular, the CFP value) may be formed by primary data or may be formed by secondary data (inventory data). In this case, the calculation (the integration) of the traceability-related information described above may include calculating a primary data ratio of traceability-related information obtained for the final product. The primary data ratio may be calculated by simple ratio calculation or may be calculated by weight calculation by substituting the CFP value with primary data ratios of the companies in the arithmetic expression for the CFP value and sequentially calculating the primary data ratio from the most upstream company.

Processing described as being performed by one apparatus may be shared and executed by a plurality of apparatuses. Alternatively, processing described as being performed by different apparatuses may be executed by one apparatus. In a computer system, it is possible to flexibly change what kinds of hardware components (server components) implement functions.

The present disclosure can also be implemented by supplying a computer program implementing the functions described in the embodiments described above to a computer and one or more processors included in the computer reading and executing the program. Such a computer program may be provided to the computer by a non-transitory computer-readable storage medium connectable to a system bus of the computer or may be provided to the computer via a network. The non-transitory computer-readable storage medium includes, for example, a disk of any type such as a magnetic disk (a floppy (registered trademark) disk, a hard disk drive (HDD), or the like) or an optical disk (a CD-ROM, a DVD disk, a blue-ray disk, or the like), a read only memory (ROM), a random access memory (RAM), an EPROM, an EEPROM, a magnetic card, a flash memory, an optical card, and a medium of any type suitable for storing an electronic instruction.

[Description of the Reference Numerals and Symbols]

1 Server apparatus
2 Company terminal
3 Dedicated server apparatus
21 Controller
22 Storage unit
23 Communication module
24 Input and output device
211 Product information generation unit
212 Authority setting unit
213 Link request unit
214 Information acquisition unit
215 Connector unit
216 Second product information generation unit

**Claims**

1. An information processing apparatus comprising a controller configured to execute:

receiving designation of one or more first platforms that manage a supply chain;
receiving input of first information concerning a first product including information concerning traceability;
referring to information concerning a rule in transmitting information to each of the first platforms and generating, from the first information, second information corresponding to each of the first platforms; and
referring to information concerning a connector corresponding to each of the first platforms and, for each of the first platforms, transmitting the second information or arranging the second information in a transmittable state in a predetermined storage region by the connector corresponding thereto.

2. The information processing apparatus according to claim 1, wherein the information concerning the rule in transmitting information to each of the first platforms and the information concerning the connector corresponding to each of the first platforms are arranged in the predetermined storage region.

3. The information processing apparatus according to claim 1, wherein the controller

refers to inventory data corresponding to the first platform in response to presence of information insufficient only with the first information with respect to information requested by the first platform, and
supplements the information insufficient only with the first information based on information obtained from the inventory data and generates the second information.

4. The information processing apparatus according to claim 1, wherein the controller outputs a warning in response to presence of information insufficient only with the first information with respect to information requested by the first platform.

5. The information processing apparatus according to claim 1, wherein, in response to third information designated as not disclosed being included in the first information, the controller generates the second information excluding the third information.

6. The information processing apparatus according to claim 5, wherein the controller

refers to inventory data corresponding to the first platform in response to the third information being included in the first information, and
supplements the excluded third information with information obtained from the inventory data and generates the second information.

7. The information processing apparatus according to claim 1, wherein

the information concerning the rule in transmitting information to each of the first platforms includes information concerning a rule concerning fourth information that cannot be disclosed according to a location of a terminal that transmits information to each of the first platforms, and
the controller generates the second information excluding the fourth information in response to the fourth information being included in the first information.

8. The information processing apparatus according to claim 7, wherein the controller

refers to inventory data corresponding to the first platform in response to the fourth information being included in the first information, and
supplements the excluded fourth information with information obtained from the inventory data and generates the second information.

9. The information processing apparatus according to claim 1, wherein

the information concerning the rule in transmitting information to each of the first platforms includes information concerning a rule of a unit, and
the controller generates the second information according to the rule of the unit corresponding to the first platform.

10. The information processing apparatus according to claim 1, wherein the first product is a product concerning a battery.

11. An information processing method comprising a computer executing:

receiving designation of one or more first platforms that manage a supply chain;
receiving input of first information concerning a first product including information concerning traceability;
referring to information concerning a rule in transmitting information to each of the first platforms and generating, from the first information, second information corresponding to each of the first platforms;
and
referring to information concerning a connector corresponding to each of the first platforms and, for each of the first platforms, transmitting the second information or arranging the second information in a transmittable state in a predetermined storage region by the connector corresponding thereto.

12. The information processing method according to claim 11, wherein the information concerning the rule in transmitting information to each of the first platforms and the information concerning the connector corresponding to each of the first platforms are arranged in the predetermined storage region.

13. The information processing method according to claim 11, wherein the computer

refers to inventory data corresponding to the first platform in response to presence of information insufficient only with the first information for information requested by the first platform, and
supplements the information insufficient only with the first information based on information obtained from the inventory data and generates the second information.

14. The information processing method according to claim 11, wherein the computer outputs a warning in response to presence of information insufficient only with the first information for information requested by the first platform.

15. The information processing method according to claim 11, wherein, in response to third information designated as not disclosed being included in the first information, the computer generates the second information excluding the third information.

16. The information processing method according to claim 15, wherein the computer

refers to inventory data corresponding to the first platform in response to the third information being included in the first information, and
supplements the excluded third information with information obtained from the inventory data and generates the second information.

17. The information processing method according to claim 11, wherein

the information concerning the rule in transmitting information to each of the first platforms includes information concerning a rule concerning fourth information that cannot be disclosed according to a location of a terminal that transmits information to each of the first platforms, and
the computer generates the second information excluding the fourth information in response to the fourth information being included in the first information.

18. The information processing method according to claim 17, wherein the computer

refers to inventory data corresponding to the first platform in response to the fourth information being included in the first information, and
supplements the excluded fourth information with information obtained from the inventory data and generates the second information.

19. The information processing method according to claim 11, wherein

the information concerning the rule in transmitting information to each of the first platforms includes information concerning a rule of a unit, and
the computer generates the second information according to the rule of the unit corresponding to the first platform.

20. The information processing method according to claim 11, wherein the first product is a product concerning a battery.

1

SERVER APPARATUS

2

2

2

2

COMPANY
TERMINAL

COMPANY
TERMINAL

COMPANY
TERMINAL

COMPANY
TERMINAL

OEM COMPANY
(Tier0)

COMPANY A
(Tier1)

COMPANY B
(Tier2)

COMPANY C
(Tier3)

DELIVERY

DELIVERY

DELIVERY

DOWNSTREAM

UPSTREAM

FIG. 1

FIG. 2

SERVER APPARATUS

PRODUCT INFORMATION A

PRODUCT INFORMATION B

PRODUCT INFORMATION C

④LINK PIECES OF PRODUCT INFORMATION BASED ON LINK INFORMATION TO GENERATE PRODUCT TREE

①TRANSMIT INFORMATION (COMPONENT INFORMATION) CONCERNING PRODUCT MANUFACTURED BY OWN COMPANY

③TRANSMIT LINK REQUEST AND SELECT PRODUCT LINKED WITH OWN PRODUCT OUT OF PRODUCTS TO WHICH UPSTREAM COMPANY PERMITS ACCESS

②TRANSMIT INFORMATION INDICATING ACCESS PERMISSION FROM DOWNSTREAM COMPANY TO OWN PRODUCT INFORMATION (PERMISSION INFORMATION)

COMPANY TERMINAL

PRODUCT INFORMATION A

COMPANY TERMINAL

PRODUCT INFORMATION B

PERMISSION INFORMATION

COMPANY A THAT PRODUCES DOWNSTREAM PRODUCT A (Tier N)

COMPANY B THAT PRODUCES UPSTREAM PRODUCT B (Tier N+1)

DOWNSTREAM <————————————————————————< UPSTREAM

FIG. 3

SERVER APPARATUS 1

CONTROLLER 11

CPU

RAM

ROM

STORAGE UNIT 12

PROGRAM

PRODUCT
INFORMATION

ACCOUNT
INFORMATION

COMMUNICATION
MODULE 13

INPUT AND OUTPUT
DEVICE 14

FIG. 4

COMPANY TERMINAL 2

CONTROLLER 21

CPU

RAM

ROM

STORAGE UNIT22

PROGRAM

RULE INFORMATION

CONNECTOR INFORMATION

COMMUNICATION MODULE 23

INPUT AND OUTPUT DEVICE 24

FIG. 5

SERVER APPARATUS 1

CONTROLLER 11

INFORMATION
COLLECTION UNIT
111

AUTHORITY
SETTING UNIT
112

LINKING UNIT
113

INFORMATION
PROVISION UNIT
114

CONNECTOR UNIT
115

STORAGE UNIT 12

ACCOUNT
INFORMATION

STORAGE REGION

PRODUCT
INFORMATION

STORAGE REGION

PRODUCT
INFORMATION

STORAGE REGION

FIG. 6

COMPANY TERMINAL 2

CONTROLLER 21

PRODUCT INFORMATION
GENERATION UNIT
211

AUTHORITY SETTING UNIT
212

LINK REQUEST UNIT
213

INFORMATION
ACQUISITION UNIT
214

CONNECTOR UNIT
215

SECOND PRODUCT
INFORMATION
GENERATION UNIT 216

FIG. 7

| COMPANY ID | | C001 |
|---|---|---|
| COMPANY NAME | | COMPANY A |
| PRODUCT ID | | P001 |
| PRODUCT NAME | | PRODUCT A |
| LINK-RELATED INFORMATION | UPSTREAM PRODUCT INFORMATION | (NOT LINKED) |
| | TERMINATION FLAG | (NOT SET) |
| TRACEABILITY -RELATED INFORMATION | MATERIAL USE AMOUNT (LITHIUM) | X[g] |
| | MATERIAL USE AMOUNT (NICKEL) | X[g] |
| | MATERIAL USE AMOUNT (COBALT) | X[g] |
| | MATERIAL USE AMOUNT (LEAD) | X[g] |
| | PRODUCTION TIME CO2 EMISSION | X[g] |
| | DD INFORMATION | *** |
| *** | *** | *** |

FIG. 8

PRODUCT REGISTRATION/DISCLOSURE DESTINATION SETTING

PERMITTED
COMPANY SETTING      PERMITTED ITEM

PRODUCT
ITEM      P0001
NUMBER

☐  A Co., Ltd.          ☑  COMPANY NAME
☐  B Co., Ltd.          ☑  OWN ITEM NUMBER
☑  C Co., Ltd.          ☑  OTHER PARTY
☐  D Co., Ltd.              ITEM NUMBER
☐  E Co., Ltd.          ☑  FOR REQUIRED
☐  F Co., Ltd.          ☑  EMISSION BASIC UNIT
                        ☑  ***

FIG. 9

PERMISSION INFORMATION GENERATED BY COMPANY TERMINAL

| COMPANY ID | C001 |
|---|---|
| PRODUCT ID | P001 |
| COMPANY ID PERMITTED TO ACCESS | *** |
| ITEM NAME TO WHICH ACCESS IS PERMITTED | *** |

FIG. 10

PRODUCT REGISTRATION/LINK DESTINATION SETTING

UPSTREAM
COMPANY

UPSTREAM
PRODUCT

PRODUCT
ITEM
NUMBER

P00001

☐ A Co., Ltd.
☐ B Co., Ltd.
☑ C Co., Ltd.
☐ D Co., Ltd.
☐ E Co., Ltd.
☐ F Co., Ltd.

☑ P10001
☑ P10002
☑ P10003
☑ P10004
☑ P10005
☑ ***

☐ THIS PRODUCT IS
   TERMINATION OF TREE
   (WITHOUT LINK DESTINATION)

FIG. 11

PRODUCT REGISTRATION/REGISTRATION DESTINATION SETTING

PLATFORM DESIGNATION

PRODUCT
ITEM            P0001
NUMBER

☐ A PLATFORM
☐ B PLATFORM
☑ C PLATFORM
☐ D PLATFORM
☐ E PLATFORM
☐ F PLATFORM

FIG. 12

PRODUCT
INFORMATION A
OF COMPANY A

PRODUCT
INFORMATION B
OF COMPANY B

INFORMATION
COLLECTION UNIT
111

STORAGE REGION B
EXCLUSIVE FOR
COMPANY B

PRODUCT
INFORMATION B

STORAGE REGION AB
SHARED BY
COMPANIES A AND B

PRODUCT
INFORMATION B

STORAGE REGION A
EXCLUSIVE FOR
COMPANY A

PRODUCT
INFORMATION A

COPY PRODUCT INFORMATION
TO SHARED REGION TO
IMPART ACCESS AUTHORITY
TO COMPANY A

ACQUIRE PRODUCT
INFORMATION THAT
COMPANY A
CAN ACCESS AND
PROVIDE PRODUCT
INFORMATION TO
COMPANY A

UPDATE
PRODUCT
INFORMATION A
TO CARRY OUT
LINKING

PERMISSION
INFORMATION FOR
PERMITTING ACCESS FROM
COMPANY A TO
PRODUCT INFORMATION B

AUTHORITY
SETTING UNIT
112

GENERATE PRODUCT TREE
BASED ON
PRODUCT INFORMATION

LINKING UNIT
113

INFORMATION
PROVISION UNIT
114

PRODUCT TREE

FIG. 13

EP 4 664 385 A1

| Tier0 | Tier1 | Tier2 | Tier3 |
|-------|-------|-------|-------|
| X | A1 $E_{A1}$ | A11 $E_{A11}$ | A111 $E_{A111}$ |
| | B1 $E_{B1}$ | A12 $E_{A12}$ | A121 $E_{A121}$ |
| | C1 $E_{C1}$ | A13 $E_{A13}$ | A122 $E_{A122}$ |
| | D1 $E_{D1}$ | A14 $E_{A14}$ | A123 $E_{A123}$ |
| | E1 $E_{E1}$ | | |

FIG. 14

X — A1 — A11 — A111
B1 — A12 — A121
C1 — A13 — A122
D1 — A14 — A123
E1

AAA Co., Ltd.
PRODUCT A12

LITHIUM USE AMOUNT ··· [g]
  RECYCLED LITHIUM AMOUNT
          OUT OF ABOVE ··· [g]
NICKEL USE AMOUNT ··· [g]
  RECYCLED NICKEL AMOUNT
          OUT OF ABOVE ··· [g]
COBALT USE AMOUNT ··· [g]
  RECYCLED COBALT AMOUNT
          OUT OF ABOVE ··· [g]
LEAD USE AMOUNT ··· [g]
  RECYCLED LEAD AMOUNT
          OUT OF ABOVE ··· [g]
CARBON DIOXIDE EMISSION ··· [g]
DD INFORMATION ···

FIG. 15

FIG. 16

START

S101 — RECEIVE DESIGNATION
OF PLATFORM

S102 — REFER TO RULE
OF PLATFORM

S103 — RECEIVE FIRST
INFORMATION INPUT

REPEAT FOR
ALL PLATFORMS

S104 — INFORMATION IS
SUFFICIENT? ——No

S108 —

Yes

OUTPUT WARNING

S105 — GENERATE SECOND
INFORMATION

S106 — REFER TO CONNECTOR

S107 — TRANSMIT SECOND
INFORMATION OR
STORE SECOND
INFORMATION

REPEAT FOR
ALL PLATFORMS

END

FIG. 17

SERVER APPARATUS 1       COMPANY TERMINAL 2

S11
GENERATE
SECOND INFORMATION

S12
STORE PRODUCT
INFORMATION

PRODUCT INFORMATION
(SECOND INFORMATION)

S13
INPUT PERMISSION
INFORMATION FOR
SPECIFIC PRODUCT

S14
IMPART ACCESS
AUTHORITY BASED
ON PERMISSION
INFORMATION

PERMISSION INFORMATION

S15
REQUEST LINKING
FOR
SPECIFIC PRODUCT

LINK REQUEST

S16
SPECIFY PRODUCT
INFORMATION TO
WHICH ACCESS IS
PERMITTED AND
GENERATE
LINK SCREEN

S17
DESIGNATE
LINK DESTINATION

LINK DATA

S18
UPDATE PRODUCT
INFORMATION AND
REFLECT CONTENT
OF LINKING

FIG. 18

SERVER APPARATUS 1                    COMPANY TERMINAL 2

S21

REQUEST
PRODUCT TREE

S22

INTEGRATE
TRACEABILITY-RELATED
INFORMATION AND
GENERATE INFORMATION
CONCERNING
PRODUCT TREE

S23

EXECUTE CONCEALING
PROCESSING ACCORDING
TO AUTHORITY

S24

OUTPUT
INFORMATION

FIG. 19

FIG. 20

```
                    ┌─────────────┐
                    │    START    │
                    └──────┬──────┘
                           │
S101 ─┌────────────────────┴────────────┐
      │ RECEIVE DESIGNATION              │
      │ OF PLATFORM                      │
      └─────────────┬───────────────────┘
                    │
S102 ─┌─────────────┴───────────────────┐
      │ REFER TO RULE                    │
      │ OF PLATFORM                      │
      └─────────────┬───────────────────┘
                    │
S103 ─┌─────────────┴───────────────────┐
      │ RECEIVE FIRST                    │
      │ INFORMATION INPUT                │
      └─────────────┬───────────────────┘
      ┌─────────────┴───────────────────┐
      │ REPEAT FOR EACH                  │
      │ OF PLATFORMS                     │
      └─────────────┬───────────────────┘
```

S104 — INFORMATION IS SUFFICIENT?   No

S201 — REFER TO INVENTORY DATA AND SUPPLEMENT FIRST INFORMATION

S202 — OUTPUT WARNING

Yes

S105 — GENERATE SECOND INFORMATION

S106 — REFER TO CONNECTOR

S107 — TRANSMIT SECOND INFORMATION OR STORE SECOND INFORMATION

REPEAT FOR EACH OF PLATFORMS

END

FIG. 21

FIG. 22

FIRST SERVER APPARATUS

SECOND SERVER APPARATUS

THIRD SERVER APPARATUS

1A

1B

1C

SECOND INFORMATION

SECOND INFORMATION

SECOND INFORMATION

3

DEDICATED SERVER APPARATUS

FIRST INFORMATION

2

COMPANY TERMINAL

FIG. 23

DEDICATED SERVER APPARATUS 3

CONTROLLER 31

CPU

RAM

ROM

STORAGE UNIT 32

PROGRAM

RULE INFORMATION

CONNECTOR INFORMATION

COMMUNICATION MODULE 33

INPUT AND OUTPUT DEVICE 34

FIG. 24

DEDICATED SERVER APPARATUS 3

CONTROLLER 31

CONNECTOR UNIT
315

SECOND PRODUCT
INFORMATION
GENERATION UNIT 316

FIG. 25

FIRST
SERVER
APPARATUS

SECOND
SERVER
APPARATUS

THIRD
SERVER
APPARATUS

1A

1B

1C

SECOND
INFORMATION

SECOND
INFORMATION

FIRST
INFORMATION

2

COMPANY TERMINAL

FIG. 26

FIRST SERVER APPARATUS 1A

CONTROLLER 11

CPU

RAM

ROM

STORAGE UNIT 12

PROGRAM

PRODUCT INFORMATION

ACCOUNT INFORMATION

RULE INFORMATION

CONNECTOR INFORMATION

COMMUNICATION MODULE 11

INPUT AND OUTPUT DEVICE 14

FIG. 27

FIRST SERVER APPARATUS 1A

CONTROLLER 11

INFORMATION
COLLECTION UNIT
111

AUTHORITY
SETTING UNIT
112

LINKING UNIT
113

INFORMATION
PROVISION UNIT
114

CONNECTOR UNIT
115

SECOND PRODUCT
INFORMATION
GENERATION UNIT 116

STORAGE UNIT 12

ACCOUNT
INFORMATION

STORAGE REGION

PRODUCT
INFORMATION

STORAGE REGION

PRODUCT
INFORMATION

STORAGE REGION

FIG. 28

SECOND
INFORMATION

TARGET PLATFORM

FIRST
SERVER
APPARATUS

SECOND
COMPANY
TERMINAL

SECOND
SERVER
APPARATUS

1A

1B

2B

METADATA

FIRST
INFORMATION

2A

FIRST
COMPANY TERMINAL

FIG. 29

SECOND SERVER APPARATUS 1B

CONTROLLER 51

CPU

RAM

ROM

STORAGE UNIT 52

PROGRAM

ACCOUNT INFORMATION

PRODUCT METADATA

COMMUNICATION MODULE 53

INPUT AND OUTPUT DEVICE 54

FIG. 30

FIRST COMPANY
TERMINAL 2A

(1) DESIGNATE PLATFORM
(2) TRANSMIT
    FIRST INFORMATION

FIRST SERVER
APPARATUS 1A

(3) GENERATE
    PRODUCT
    METADATA
(8) GENERATE
    SECOND
    INFORMATION

(7) REQUEST
    PRODUCT
    INFORMATION

SECOND COMPANY
TERMINAL 2B

(9) PROVIDE
    SECOND
    INFORMATION

(5) SEARCH WITH
    PRODUCT ID

(6) ACQUIRE URL

(4)REGISTER PRODUCT
   META DATA
   ·PRODUCT ID
   ·URL

SECOND SERVER
APPARATUS 1B

FIG. 31

START

S401 — RECEIVE DESIGNATION OF PLATFORM

S402 — REFER TO RULE OF PLATFORM

S403 — ACQUIRE FIRST INFORMATION

REPEAT FOR ALL PLATFORMS

S404 — INFORMATION IS SUFFICIENT?
— No → S405 — OUTPUT WARNING

Yes

S406 — PRODUCT METADATA IS NECESSARY? — No

Yes

S407 — GENERATE PRODUCT METADATA

S408 — REFER TO CONNECTOR

S409 — TRANSMIT PRODUCT METADATA

S410 — GENERATE SECOND INFORMATION

S411 — REFER TO CONNECTOR

S412 — TRANSMIT SECOND INFORMATION OR STORE SECOND INFORMATION

REPEAT FOR ALL PLATFORMS

END

FIG. 32

START

S501 — RECEIVE REQUEST FOR PRODUCT INFORMATION

S502 — EXTRACT SECOND INFORMATION

S503 — SELECT CONNECTOR

S504 — TRANSMIT SECOND INFORMATION

END

FIG. 33

## INTERNATIONAL SEARCH REPORT

| International application No. |
|---|
| **PCT/JP2023/026399** |

| A. | CLASSIFICATION OF SUBJECT MATTER |
|---|---|

*G06Q 50/04*(2012.01)i; *G06F 9/06*(2006.01)i; *G06F 9/445*(2018.01)i; *G06F 16/9035*(2019.01)i; *G06Q 10/0833*(2023.01)i
FI:   G06Q50/04; G06F9/06; G06F9/445; G06F16/9035; G06Q10/0833

According to International Patent Classification (IPC) or to both national classification and IPC

| B. | FIELDS SEARCHED |
|---|---|

Minimum documentation searched (classification system followed by classification symbols)

G06Q10/00-99/00; G06F9/06; G06F9/445; G06F16/9035

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2004-524600 A (SEEBEYOND TECHNOLOGY CORPORATION) 12 August 2004 (2004-08-12)<br>claims 18, 23, 28-29, 33, 36, 44, paragraphs [0016], [0033], [0035]-[0037], [0046], [0083]-[0084], fig. 1-2, 8 | 1-2, 10-12, 20 |
| Y | claims 18, 23, 28-29, 33, 36, 44, paragraphs [0016], [0033], [0035]-[0037], [0046], [0083]-[0084], fig. 1-2, 8 | 3-5, 9, 13-15, 19 |
| A | claims 18, 23, 28-29, 33, 36, 44, paragraphs [0016], [0033], [0035]-[0037], [0046], [0083]-[0084], fig. 1-2, 8 | 6-8, 16-18 |
| A | JP 2020-129389 A (KAGIWADA, Yoshimitsu) 27 August 2020 (2020-08-27)<br>paragraphs [0005], [0017], [0020], fig. 3 | 1-2, 10-12, 20 |
| Y | JP 2015-115016 A (MATSUKAWA, Hiroaki) 22 June 2015 (2015-06-22)<br>paragraphs [0017]-[0018] | 3-4, 13-14 |
| Y | US 2021/0117477 A1 (THE TORONTO-DOMINION BANK) 22 April 2021 (2021-04-22)<br>claim 2 | 5, 15 |

✓ Further documents are listed in the continuation of Box C.       ✓ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **10 August 2023** | **22 August 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

# EP 4 664 385 A1

## INTERNATIONAL SEARCH REPORT

International application No.

**PCT/JP2023/026399**

### C. DOCUMENTS CONSIDERED TO BE RELEVANT

| Category* | Citation of document, with indication, where appropriate, of the relevant passages | Relevant to claim No. |
|---|---|---|
| Y | JP 2004-511842 A (MANUGISTICS, INC.) 15 April 2004 (2004-04-15)<br>paragraphs [0080]-[0081] | 9, 19 |
| A | JP 2008-139995 A (HITACHI, LTD.) 19 June 2008 (2008-06-19)<br>entire text, all drawings | 1-20 |
| A | JP 2005-509953 A (LOCKHEED MARTIN CORPORATION) 14 April 2005 (2005-04-14)<br>entire text, all drawings | 1-20 |

Form PCT/ISA/210 (second sheet) (January 2015)

63

## INTERNATIONAL SEARCH REPORT
### Information on patent family members

International application No.

**PCT/JP2023/026399**

| Patent document cited in search report | | | Publication date (day/month/year) | Patent family member(s) | | | Publication date (day/month/year) |
|---|---|---|---|---|---|---|---|
| JP | 2004-524600 | A | 12 August 2004 | WO | 2002/039351 | A2 | |
| | | | | claims 18, 23, 28-29, 33, 36, 44, p. 4, lines 15-20, p. 8, lines 3-8, 13-31, p. 10, lines 18-21, p. 16, line 33 to p. 17, line 10, fig. 1-2, 8 | | | |
| | | | | EP | 1332430 | A2 | |
| | | | | KR | 10-2003-0064779 | A | |
| JP | 2020-129389 | A | 27 August 2020 | US | 2015/0142614 | A1 | |
| | | | | paragraphs [0005], [0021], [0024], fig. 3 | | | |
| | | | | WO | 2014/024999 | A1 | |
| | | | | EP | 2884449 | A1 | |
| | | | | CN | 108510374 | A | |
| | | | | KR | 10-2019-0112206 | A | |
| JP | 2015-115016 | A | 22 June 2015 | (Family: none) | | | |
| US | 2021/0117477 | A1 | 22 April 2021 | US | 2022/0138264 | A1 | |
| JP | 2004-511842 | A | 15 April 2004 | US | 2002/0138324 | A1 | |
| | | | | paragraphs [0095]-[0096] | | | |
| | | | | TW | 577003 | B | |
| JP | 2008-139995 | A | 19 June 2008 | US | 2008/0148365 | A1 | |
| | | | | entire text, all drawings | | | |
| | | | | EP | 1927924 | A1 | |
| | | | | KR | 10-2009-0004360 | A | |
| | | | | TW | 200832255 | A | |
| JP | 2005-509953 | A | 14 April 2005 | US | 7805415 | B1 | |
| | | | | entire text, all drawings | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004171146 A